# EUROPEAN PATENT SPECIFICATION

(11) **EP 1 437 846 B1**
(45) Date of publication and mention of the grant of the patent: **13.04.2011**
(21) Application number: 02802026.1
(22) Date of filing: 18.10.2002
(51) Int. Cl.: H04W 52/16, H04W 52/36

(54) **RADIO CONTROL APPARATUS, BASE STATION, RADIO CONTROL METHOD, MOBILE PACKET COMMUNICATION SYSTEM, MOBILE STATION, RADIO CONTROL PROGRAM, AND COMPUTER-READABLE RECORDING MEDIUM**
FUNKSTEUERVORRICHTUNG, BASISSTATION, FUNKSTEUERVERFAHREN, MOBILPAKETKOMMUNIKATIONS SYSTEM, MOBILSTATION, FUNKSTEUERPROGRAMM UND COMPUTERLESBARES AUFZEICHNUNGSMEDIUM
APPAREIL DE COMMANDE RADIO, STATION DE BASE, PROCEDE DE COMMANDE RADIO, SYSTEME DE COMMUNICATION DE MOBILE PAR PAQUET, STATION MOBILE, PROGRAMME DE COMMANDE RADIO, ET SUPPORT D'ENREGISTREMENT LISIBLE PAR ORDINATEUR

(30) Priority: 19.10.2001 JP 2001322669
(43) Date of publication of application: 14.07.2004
(73) Proprietor: NTT DoCoMo, Inc., Tokyo 100-6150 (JP)
(72) Inventor: HAYASHI, Takahiro, c/o Intellectual Property Department,, Tokyo 100-6150 (JP); ANDO, Hidehiro, c/o Intellectual Property Department,, Tokyo 100-6150 (JP); ISHIKAWA, Yoshihiro, NTT DoCoMo Inc., Tokyo 100-6150 (JP); IWAMURA, Mikio, NTT DoCoMo Inc., Tokyo 100-6150 (JP); NAKAMURA, Takehiro, NTT DoCoMo Inc., Tokyo 100-6150 (JP); ISHII, Minami, NTT DoCoMo Inc., Tokyo 100-6150 (JP)
(74) Representative: Viering, Jentschura & Partner
(86) International application number: PCT/JP2002/010850
(87) International publication number: WO 2003/036822

(56) References cited:
- EP-A- 1 067 704
- EP-A- 1 089 458
- JP-A- 7 095 151
- JP-A- 10 112 683
- JP-A- 2001 069 077
- JP-A- 2001 244 881
- JP-A- 2002 084 578
- JP-A- 2002 330 461
- "DSCH power control improvement in Soft Handover: Proposed Draft TR" 3GPP TSG RAN WG1#15, XX, XX, 16 October 2000 (2000-10-16), pages 1-15, XP002239080
- 25 June 2001, MARUZEN CO. LTD. article KYOJI TACHIKAWA: 'W-CDMA ido tsushin hoshiki', pages 101 - 103, XP002962949

## Description

### Technical Field

The present invention relates to a radio network controller, a base transceiver station, a radio network control method, a mobile packet communication system, a mobile station, a radio network control program and a computer-readable recording medium.

### Background Art

Heretofore, in a mobile packet communication, from a viewpoint of enhancing fective frequency utilization and from a characteristic that some delay is allowed in the packet communication, a technique of sharing a single wireless channel among a plurality of mobile stations has been usually used, in which user data for the plurality of mobile stations are transmitted over the single wireless channel in a manner of not being overlapped with one another in terms of time, that is, the user data are transmitted while being time-multiplexed.

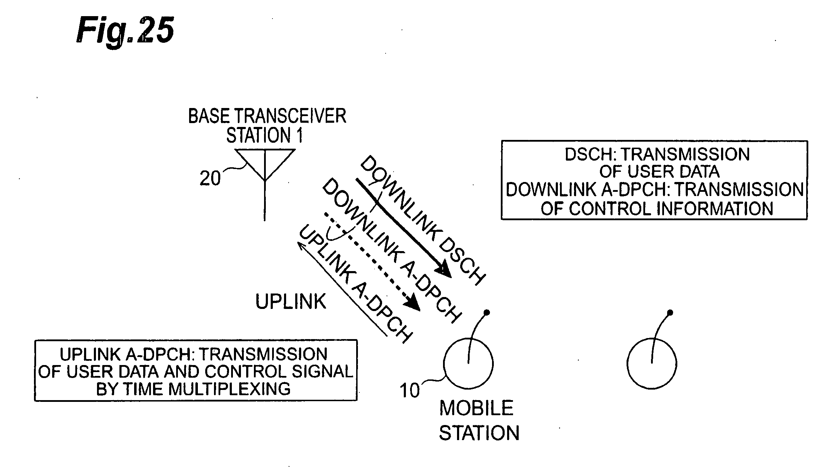

For such a channel configuration, for example, there has been a specification defined by 3GPP, as shown in Fig. 25 (refer to 3GPP TS25.211). Note that a radio access network (RAN) in such a mobile packet communication system has been disclosed in, for example, ' "Physical channels and mapping of transport channels onto physical channels (FDD) (Release 1999)" 3GPP TS25.211 V3.11.0 (2002-06), "Multiplexing and channel coding (FDD) (Release 1999)" 3GPP TS 25.212 V3.10.0 (2002-06), "Spreading and modulation (FDD) (Release 1999)" 3GPP TS 25.213 V3.8.0 (2002-06), "Physical layer procedures (FDD) (Release 1999)" 3GPP TS 25.214 V3.10.0 (2002-03), "Physical layer - Measurements (FDD) (Release 1999) 3GPP TS 25.215 V3.10.0 (2003-03), and the like (refer to http://www.3gpp.org/ftp/Specs/latest/R1999/25_series/25211-3b0.zip/, 25212-3a0.zip, 25213-380.zip, 25214-3a0.zip, 25215-3a0.zip and the like), which are technical specifications of 3rd Generation Partnership Project; Technical Specification Group Radio Access Network.

Specifically, in a downlink, two wireless channels are used, one of which is a shared channel (hereinafter, DSCH) that is shared by a plurality of the mobile stations 10 and is capable of transmitting the user data to the respective mobile stations 10, and the other of which is a dedicated channel (hereinafter, Downlink A-DPCH) that is set for each mobile station 10 and is capable of transmitting a control signal to the mobile station 10. Meanwhile, in an uplink, one dedicated channel (hereinafter, Uplink A-DPCH) is used, which is set for each mobile station 10 and is capable of transmitting user data and a control signal to the base transceiver station 20 while multiplexing the user data and the control signal. Thus, packet communication is performed.

Here, the Downlink A-DPCH is in charge of transmitting control signals and set at a relatively low link speed. On the other hand, the DSCH is set at a high link speed compared with the Downlink A-DPCH so as to enable communication of user data at a high speed.

When transmitting user data through the DSCH in the mobile packet communication system having the channel configuration as described above, first, the base transceiver station 20 notifies the mobile station 10 in advance that the transmission of user data through the DSCH will be made, through the Downlink A-DPCH in a radio frame prior to a radio frame to transmit the user data through the DSCH. Then, the mobile station 10 which has received the notice starts receiving the user data through the DSCH only when the transmission of the user data through the DSCH is checked out to be made.

As described above, the base transceiver station 20 notifies the plurality of mobile stations 10 of the DSCH transmission through the Downlink A-DPCHs individually, and subsequently transmits user data through the DSCH. In this way, the base transceiver station 20 can freely change the partner mobile stations 10 to which user data are transmitted through the DSCH, and can transmit the user data to the plurality of mobile stations 10 individually through the single shared channel while time-multiplexing the user data, thus enabling efficient packet communication.

Note that, although the two channels, which are the Downlink A-DPCH and the DSCH, are set as the downlinks between the base transceiver station and each mobile station, the DSCH is not continuously set, but is set only when receiving a notice through the Downlink A-DPCH.

Incidentally, in a wireless communication system, such as CDMA, which configures channels by use of codes, control of transmission powers of the Uplink A-DPCH, the Downlink A-DPCH and the DSCH becomes an important element technology, for the purpose of solving a near-far problem and increasing subscriber capacity. For example, in the W-CDMA system which has been decided to be adopted in IMT-2000, transmission power control technologies called high-speed transmission power control (hereinafter, TPC) and outer loop transmission power control are applied.

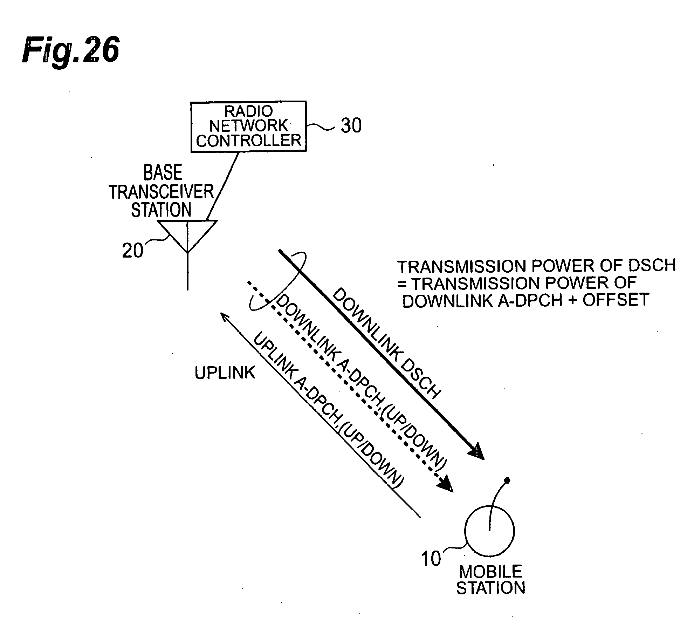

The transmission power control technologies will be described below by taking the CDMA as an example. Fig. 26 is a schematic view showing operation of the transmission power control in the CDMA.

First, the TPC will be described. The mobile station 10 acquires a signal to interference ratio (hereinafter, SIR) of the received Downlink A-DPCH, and compares a result of the acquired SIR with a predetermined target value of the SIR. If the acquired SIR of the Downlink A-DPCH is lower than the target value of the SIR, the mobile station 10 transmits a TPC command for controlling transmission power of the Downlink A-DPCH so as to increase the transmission power of the Downlink A-DPCH, to the base transceiver station 20 through the Uplink A-DPCH. On the other hand, if the acquired SIR is larger than the target value of the SIR, the mobile station 10 transmits a TPC command to the base transceiver station 20 through the Uplink A-DPCH so as to lower the transmission power of the Downlink A-DPCH. The base transceiver station 20 then controls the transmission power of the Downlink A-DPCH based on this TPC command.

Meanwhile, the base transceiver station 20 also calculates a SIR of the received Uplink A-DPCH and compares the acquired SIR of the Uplink A-DPCH with a predetermined target value of the SIR. Based on this, the base transceiver station 20 transmits a TPC command for requesting increase or decrease of the transmission power through the Down A-DPCH. The mobile station 10 then controls the transmission power of the Uplink A-DPCH based on this TPC command. In this way, the mobile station 10 and the base transceiver station 20 mutually adjust the transmission powers by the TPC, and are operated so as to always maintain the optimal transmission powers.

Furthermore, the transmission power control technology called the outer loop transmission power control is also applied to the Uplink A-DPCH and the Downlink A-DPCH. While the TPC controls the transmission powers based on the comparison between the SIR of the received signal and the target value of the SIR, this outer loop transmission power control further controls the target value of the SIR of the TPC based on quality of the received data such as a frame error rate of the data acquired on each receiving side.

By applying the transmission power control technology having a two-stage constitution of the TPC and the outer loop transmission power control as described above, the optimization of the transmission powers for the Downlink A-DPCH and the Uplink A-DPCH is achieved.

Meanwhile, the transmission power of the DSCH is controlled based on a value obtained by, for example, adding a predetermined value (offset value) to a value of the transmission power of the Downlink A-DPCH, that is, based on the transmission power of the Downlink A-DPCH. This is because the transmission power of the Downlink A-DPCH is thought to be always optimally controlled based on the TPC, the outer loop transmission power control and the like, and because the wireless link states of the Downlink A-DPCH and the DSCH can be regarded approximately identical since data are simultaneously transmitted to the mobile station 10 through the Downlink A-DPCH and the DSCH.

Here, the offset value is notified to the base transceiver station 20 from the radio network controller 30 controlling the base transceiver station, and is a fixed value predetermined by a carrier in accordance with an information transmission rate of the DSCH and the like.

However, the optimal value of this offset value is originally changed depending on a positional relationship between the mobile station 10 and the base transceiver station 20 and the like. Therefore, if the transmission power control of the DSCH is performed with a fixed offset value, the transmission power of the DSCH may become deficient or excessive. When the DSCH is deficient in the transmission power, the communication quality is deteriorated. Moreover, when the transmission power is excessive, larger interferences are given to the other mobile stations 10 performing communication although the communication quality of the relevant mobile station is maintained. Therefore, the quality is deteriorated as a whole.

The present invention has been made in view of the foregoing problems. It is an object of the present invention to provide a radio network controller, a base transceiver station, a radio network control method, a mobile packet communication system, a mobile station, radio network control program and a computer-readable recording medium, which are capable of optimizing the transmission power of a shared channel while restricting the deterioration in communication quality.

### Disclosure of the Invention

The present invention solves the above mentioned problems as defined in the independent claims.

In order to solve the foregoing problems, a radio network controller according to the present invention is one for controlling a base transceiver station which transmits a first signal to a plurality of mobile stations by predetermined transmission power by use of dedicated channels to the respective mobile stations, and transmits a second signal to the plurality of mobile stations by transmission power controlled based on the transmission power of the dedicated channel by use of a single shared channel among the plurality of mobile stations in a manner of not being overlapped in terms of time. The radio network controller is characterized by including controller side shared channel quality acquiring means for acquiring information regarding reception quality of the shared channel in the mobile stations, and shared channel transmission power controlling means for further controlling the transmission power of the shared channel based on the acquired information regarding the reception quality of the shared channel.

A base transceiver station according to the present invention is characterized by including dedicated channel transmitting means for transmitting a first signal to a plurality of mobile stations by predetermined transmission power by use of dedicated channels to the respective mobile stations, shared channel transmitting means for transmitting a second signal to the plurality of mobile stations by transmission power controlled based on the transmission power of the dedicated channel by use of a single shared channel among the plurality of mobile stations in a manner of not being overlapped in terms of time, controller side shared channel quality acquiring means for acquiring information regarding reception quality of the shared channel in the mobile stations, and shared channel transmission power controlling means for further controlling the transmission power of the shared channel based on the acquired information regarding the reception quality of the shared channel.

A radio network control method according to the present invention is one for transmitting a first signal to a plurality of mobile stations by predetermined transmission power by use of dedicated channels to the respective mobile stations, and for transmitting a second signal to the plurality of mobile stations by transmission power controlled based on the transmission power of the dedicated channel by use of a single shared channel among the plurality of mobile stations in a manner of not being overlapped in terms of time. The radio network control method is characterized by including a controller side shared channel quality acquiring step of acquiring information regarding reception quality of the shared channel in the mobile stations, and a shared channel transmission power controlling step of further controlling the transmission power of the shared channel based on the acquired information regarding the reception quality of the shared channel.

A radio network control program according to the present invention is one for allowing a computer to execute control for transmitting a first signal to a plurality of mobile stations by predetermined transmission power by use of dedicated channels to the respective mobile stations, and control for transmitting a second signal to the plurality of mobile stations by transmission power controlled based on the transmission power of the dedicated channel by use of a single shared channel among the plurality of mobile stations in a manner of not being overlapped in terms of time. The radio network control program allows the computer to execute a controller side shared channel quality acquiring step of acquiring information regarding reception quality of the shared channel in the mobile stations, and a shared channel transmission power controlling step of further controlling the transmission power of the shared channel based on the acquired information regarding the reception quality of the shared channel.

According to these inventions, the information regarding the reception quality of the shared channel in the mobile stations is acquired, and the transmission power of the shared channel is further controlled based on the information regarding the reception quality of the shared channel in addition to the transmission power of the dedicated channel. Therefore, it is made possible to optimize the transmission power of this shared channel while restricting deterioration in the reception quality.

Here, in the radio network controller and the base transceiver station, it is preferable that storing means for storing the information regarding the reception quality of the shared channel, which is acquired by the controller side shared channel quality acquiring means, in association with the mobile stations be provided, and that the shared channel transmission power controlling means control the transmission power of the shared channel based on the information regarding the reception quality of the shared channel, which is stored in the storing means.

In the radio network control method, it is preferable that a storing step of storing the information regarding the reception quality of the shared channel, which is acquired by the controller side shared channel quality acquiring step, in storing means in association with the mobile stations be included, and that the shared channel transmission power controlling step control the transmission power of the shared channel based on the information regarding the reception quality of the shared channel, which is stored in the storing means.

In the radio network control program, it is preferable that a storing step of storing the information regarding the reception quality of the shared channel, which is acquired by the controller side shared channel quality acquiring step, in storing means in association with the mobile stations be further executed by the computer, and that the shared channel transmission power controlling step control the transmission power of the shared channel based on the information regarding the reception quality of the shared channel, which is stored in the storing means.

According to these, it is made possible to store the information regarding the reception quality of the shared channel in association with the mobile stations and to read the information regarding the reception quality of the corresponding shared channel when needed. Therefore, the control of the transmission power of the shared channel for each of the mobile stations is suitably performed.

Moreover, in the radio network controller and the base transceiver station, it is preferable that the controller side shared channel quality acquiring means acquire information regarding a signal to interference ratio of the shared channel as the information regarding the reception quality of the shared channel in the mobile stations.

In the radio network control method and the radio network control program, it is preferable that the controller side shared channel quality acquiring step acquire information regarding a signal to interference ratio of the shared channel as the information regarding the reception quality of the shared channel in the mobile stations.

Furthermore, in the radio network controller and the base transceiver station, the controller side shared channel quality acquiring means may acquire information regarding a result of CRC determination on the second signal received through the shared channel as the information regarding the reception quality of the shared channel in the mobile stations.

In the radio network control method and the radio network control program, the controller side shared channel quality acquiring step may acquire information regarding a result of CRC determination on the second signal received through the shared channel as the information regarding the reception quality of the shared channel in the mobile stations.

Further, in the radio network controller and the base transceiver station, the controller side shared channel quality acquiring means may acquire information regarding retransmission control of the second signal received through the shared channel as the information regarding the reception quality of the shared channel in the mobile stations.

In the radio network control method and the radio network control program, the controller side shared channel quality acquiring step may acquire information regarding retransmission control of the second signal received through the shared channel as the information regarding the reception quality of the shared channel in the mobile stations.

The indices described above are employed as the information regarding the quality of the shared channel, and thus the control of the transmission power of the shared channel is suitably performed.

Moreover, in the radio network controller and the base transceiver station, it is preferable that the shared channel transmission power controlling means include first offset value controlling means for increasing an offset value of the transmission power of the shared channel when the reception quality of the shared channel does not satisfy a predetermined criterion, or decreasing the offset value of the transmission power of the shared channel when the reception quality of the shared channel satisfies the criterion.

In the radio network control method and the radio network control program, it is preferable that the shared channel transmission power controlling step include a first offset value controlling step of increasing an offset value of the transmission power of the shared channel when the reception quality of the shared channel does not satisfy a predetermined criterion, or decreasing the offset value of the transmission power of the shared channel when the reception quality of the shared channel satisfies the criterion.

According to these, the offset value is increased or decreased based on the reception quality of the shared channel, and the transmission power of the shared channel is controlled to be a value obtained by adding the offset value to the transmission power of the dedicated channel in the base transceiver station. Thus, the control of the transmission power of the shared channel is performed easily and efficiently.

Moreover, in the radio network controller and the base transceiver station, it is preferable that the first offset value controlling means should not increase and decrease the transmission power of the shared channel based on the reception quality of the shared channel when the information regarding the reception quality of the shared channel was not able to be acquired.

In the radio network control method and the radio network control program, it is preferable that the first offset value controlling step should not increase and decrease the transmission power of the shared channel based on the reception quality of the shared channel when the information regarding the reception quality of the shared channel was not able to be acquired.

According to these, increase and decrease of the offset value based on the reception quality of the shared channel are not performed when the information regarding the reception quality of the shared channel was not able to be acquired. Therefore, unnecessary variation in the transmission power of the shared channel is restricted, and the transmission of the second signal by the shared channel is stably performed.

Moreover, in the radio network controller and the base transceiver station, signal to interference ratio target value acquiring means for acquiring information regarding a target value, set in each of the mobile stations, of a signal to interference ratio of the dedicated channel may be provided, and the shared channel transmission power controlling means may further control the transmission power of the shared channel based on the information regarding the target value of the signal to interference ratio.

In the radio network control method and the radio network control program, a signal to interference ratio target value acquiring step of acquiring information regarding a target value, set in each of the mobile stations, of a signal to interference ratio of the dedicated channel may be provided, and the shared channel transmission power controlling step may further control the transmission power of the shared channel based on the received information regarding the target value of the signal to interference ratio.

In order to optimize the transmission power of the dedicated channel from the base transceiver station to each of the mobile stations, there are some cases where so-called TPC is performed, which sets the target value of the signal to interference ratio of the dedicated channel in the base transceiver station, and controls the transmission power of the dedicated channel such that a signal to interference ratio of the dedicated channel becomes this target value of the signal to interference ratio, and further, so-called outer loop control is performed, which controls this target value of the signal to interference ratio based on the quality of the control signal received through the dedicated channel.

In this case, when the target value of the signal to interference ratio is changed by these TPC and outer loop control, the transmission power of the dedicated channel is changed together with this change. Accordingly, a change in the transmission power of the shared channel based on the change in the transmission power of the dedicated channel, and a change in the transmission power of the shared channel based on the information regarding the reception quality of the shared channel may occur at the same time in the control of the transmission power of the shared channel. Thus, a radical variation in the transmission power of the shared channel may be caused.

However, according to the above-described inventions, it is made possible to acquire the information regarding the target value of the signal to interference ratio in the base transceiver station, and to further control the transmission power of the shared channel based on this information regarding the target value of the signal to interference ratio. Therefore, it is made possible to adjust an increasing and decreasing range of the transmission power of the shared channel while taking account of the change in the dedicated channel due to the change in the target value of the signal to interference ratio. Thus, it is made possible to optimize the transmission power of the shared channel more suitably.

Moreover, in the radio network controller and the base transceiver station, the shared channel transmission power controlling means may include second offset value controlling means for increasing an offset value of the transmission power of the shared channel when the reception quality of the shared channel does not satisfy a predetermined criterion, or decreasing the offset value of the transmission power of the shared channel when the reception quality of the shared channel satisfies the criterion, and further subtracting an amount regarding a change in the target value of the signal to interference ratio from the offset value of the transmission power of the shared channel.

In the radio network control method and the radio network control program, the shared channel transmission power controlling step may include a second offset value controlling step of increasing an offset value of the transmission power of the shared channel when the reception quality of the shared channel does not satisfy a predetermined criterion, or decreasing the offset value of the transmission power of the shared channel when the reception quality of the shared channel satisfies the criterion, and further subtracting an amount regarding a change in the target value of the signal to interference ratio from the offset value of the shared channel.

According to these, the offset value is increased or decreased based on the reception quality of the shared channel, and the transmission power of the shared channel is controlled to be a value obtained by adding the offset value to the transmission power of the dedicated channel on the base transceiver station side. Thus, the control of the transmission power of the shared channel based on the transmission power of the dedicated channel and the reception quality of the shared channel is performed easily and efficiently. In addition, when the target value of the signal to interference ratio is increased/decreased, an amount regarding the increase/decrease in this target value of the signal to interference ratio is subtracted from this offset value. Therefore, an amount of the increase/decrease in the transmission power of the dedicated channel, which is changed with this increase/decrease in the target value, can be subtracted from the variation in the offset in advance, and a radical variation in the transmission power of the shared channel can be restricted.

Moreover, in the radio network controller and the base transceiver station, it is preferable that the second offset value controlling means should not increase and decrease the transmission power of the shared channel based on the reception quality of the shared channel when the information regarding the reception quality of the shared channel was not able to be acquired.

In the radio network control method and the radio network control program, it is preferable that the second offset value controlling step should not increase and decrease the transmission power of the shared channel based on the reception quality of the shared channel when the information regarding the reception quality of the shared channel was not able to be acquired.

According to these, increase and decrease of the offset value based on the reception quality of the shared channel are not performed when the information regarding the reception quality of the shared channel was not able to be acquired. Therefore, unnecessary variation in the transmission power of the shared channel is restricted, and the transmission of a data signal by the shared channel is stably performed.

Moreover, in the radio network controller, the radio network control method and the radio network control program, the first signal may be a control signal, and the second signal may be a data signal.

A mobile packet communication system according to the present invention is one including a base transceiver station and a radio network controller for controlling the base transceiver station. The base transceiver station includes dedicated channel transmitting means for transmitting a first signal to a plurality of mobile stations by predetermined transmission power by use of dedicated channels to the respective mobile stations, and shared channel transmitting means for transmitting a second signal to the plurality of mobile stations by transmission power controlled based on the transmission power of the dedicated channel by use of a single shared channel among the plurality of mobile stations in a manner of not being overlapped in terms of time. The mobile packet communication system is characterized in that the radio network controller is any of the above-described radio network controllers.

According to the mobile packet communication system of the present invention, information regarding the reception quality of the shared channel in the mobile stations is acquired at the radio network controller, and the transmission power of the shared channel is further controlled based on the information regarding the reception quality of the shared channel in addition to the transmission power of the dedicated channel. Therefore, it is made possible to optimize the transmission power of this shared channel while restricting deterioration in the reception quality.

A mobile station according to the present invention is one, to which a first signal is transmitted from a base transceiver station by predetermined transmission power by use of a dedicated channel, and a second signal is transmitted from the base transceiver station by use of a single shared channel with other mobile stations in a manner of not being overlapped in terms of time, by transmission power controlled based on the transmission power of the dedicated channel. The mobile station is characterized by including mobile station side shared channel quality acquiring means for acquiring reception quality of the shared channel, and shared channel quality transmitting means for transmitting information regarding the reception quality of the shared channel to the base transceiver station.

According to the mobile station of the present invention, the transmission power of the shared channel is acquired and transmitted to the base transceiver station. Therefore, it is made possible to further control the transmission power of the shared channel on the base transceiver station side based on the information regarding the reception quality of the shared channel. Thus, it is made possible to optimize the transmission power of the shared channel while restricting deterioration in the reception quality.

Here, in the mobile station, it is preferable that the mobile station side shared channel quality acquiring means acquire information regarding a signal to interference ratio of the shared channel as the information regarding the reception quality of the shared channel.

Moreover, in the mobile station, the mobile station side shared channel quality acquiring means may acquire information regarding a result of CRC determination on the second signal received through the shared channel as the information regarding the reception quality of the shared channel in the mobile station.

Furthermore, in the mobile station, the mobile station side shared channel quality acquiring means may acquire information regarding retransmission control of the second signal received through the shared channel as the information regarding the reception quality of the shared channel in the mobile station.

The indices described above are employed as the information regarding the quality of the shared channel, and thus the control of the transmission power of the shared channel is suitably performed.

Moreover, in the mobile station, the shared channel quality transmitting means may further transmit information regarding a target value of a signal to interference ratio of the dedicated channel to the base transceiver station.

In order to optimize the transmission power of the dedicated channel from the base transceiver station to the mobile station, there are some cases where so-called TPC is performed, which sets the target value of the signal to interference ratio of the dedicated channel in the base transceiver station, and generates and transmits a control command for controlling the transmission power of the dedicated channel such that a signal to interference ratio of the dedicated channel becomes this target value of the signal to interference ratio, and further, so-called outer loop control is performed, which controls this target value of the signal to interference ratio based on the quality of the control signal received through the dedicated channel.

In this case, when the target value of the signal to interference ratio is changed by these TPC and outer loop control, the transmission power of the dedicated channel is changed together with this change. Accordingly, a change in the transmission power of the shared channel based on the change in the transmission power of the dedicated channel, and a change in the transmission power of the shared channel based on the information regarding the reception quality of the shared channel may occur at the same time in the control of the transmission power of the shared channel. Thus, a radical variation in the transmission power of the shared channel may be caused.

However, according to the mobile station of the present invention, it is made possible to transmit the information regarding the target value of the signal to interference ratio to the base transceiver station, and to further control the transmission power of the shared channel based on this information regarding the target value of the signal to interference ratio, and to adjust an increasing and decreasing range of the transmission power of the shared channel while taking account of the change in the transmission power of the dedicated channel due to the change in the target value of the signal to interference ratio. Therefore, it is made possible to optimize the transmission power of the shared channel more suitably.

Moreover, in the mobile station, the first signal may be a control signal, and the second signal may be a data signal.

### Brief Description of the Drawings

Fig. 1 is a schematic diagram of a mobile packet communication system according to a first embodiment.
Fig. 2 is a block diagram of the mobile packet communication system according to the first embodiment.
Fig. 3 is a flowchart showing processing procedures of an offset calculation unit in Fig. 2.
Fig. 4 is a block diagram of a mobile packet communication system according to a second embodiment.
Fig. 5 is a flowchart showing processing procedures of an offset calculation unit in Fig. 4.
Fig. 6 is a block diagram of a mobile packet communication system according to a third embodiment.
Fig. 7 is a flowchart showing processing procedures of an offset calculation unit in Fig. 6.
Fig. 8 is a block diagram of a mobile packet communication system according to a fourth embodiment.
Fig. 9 is a flowchart showing processing procedures of an offset calculation unit in Fig. 8.
Fig. 10 is a schematic diagram of a mobile packet communication system according to a fifth embodiment.
Fig. 11 is a block diagram of the mobile packet communication system according to a fifth embodiment.

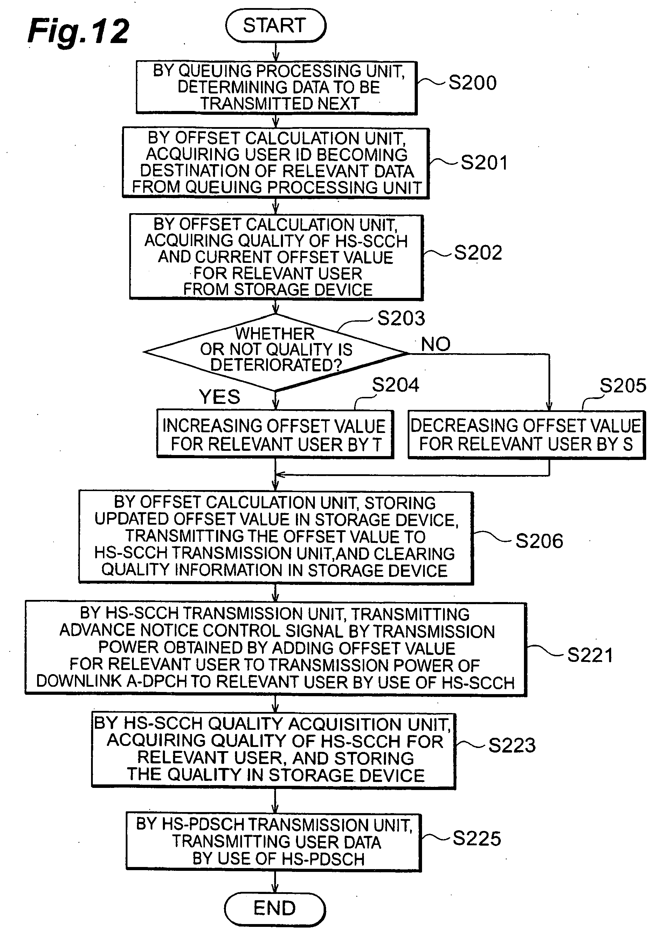

Fig. 12 is a flowchart showing processing procedures of a base transceiver station in Fig. 11.
Fig. 13 is a block diagram of a mobile packet communication system according to a sixth embodiment.
Fig. 14 is a flowchart showing processing procedures of a base transceiver station in Fig. 13.
Fig. 15 is a block diagram of a mobile packet communication system according to a seventh embodiment.
Fig. 16 is a flowchart showing processing procedures of a base transceiver station in Fig. 15.
Fig. 17 is a schematic diagram of a mobile packet communication system according to an eighth embodiment.
Fig. 18 is a block diagram of the mobile packet communication system according to the eighth embodiment.
Fig. 19 is a schematic diagram of a mobile packet communication system according to a ninth embodiment.
Fig. 20 is a block diagram of the mobile packet communication system according to the ninth embodiment.
Fig. 21 is a diagram of a recording medium according to the present embodiments.
Fig. 22 is a diagram of another recording medium according to the present embodiments.
Fig. 23 is a system diagram of a computer.
Fig. 24 is a perspective view of the computer.
Fig. 25 is a diagram of a conventional mobile packet communication system.
Fig. 26 is a schematic view showing a control method of transmission power of a DSCH in the conventional mobile packet communication system of Fig. 25.

### Best Modes for Carrying Out the Invention

Preferred embodiments of a radio network controller, a radio network control method, a mobile packet communication system and a mobile station according to the present invention will be described below in detail with reference to the accompanying drawings.

### (First embodiment)

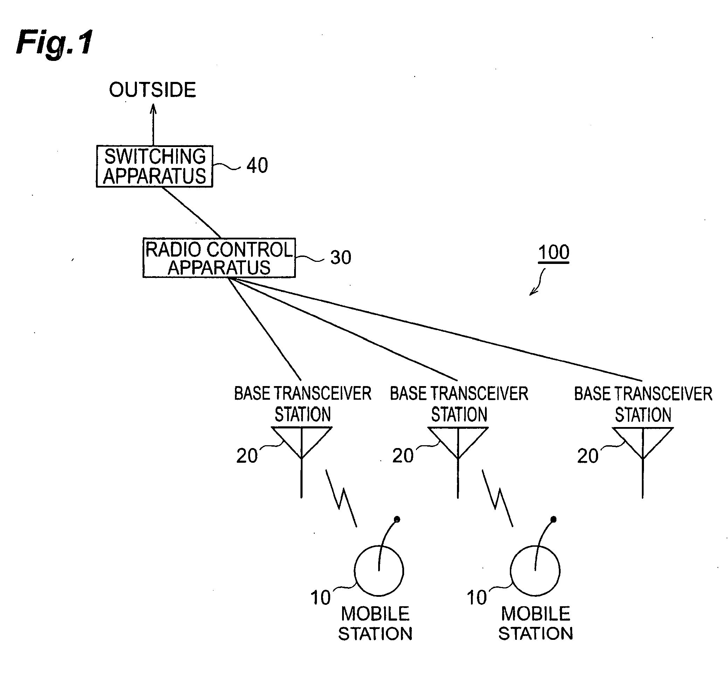

Fig. 1 shows a general structure of the mobile packet communication system 100 of a first embodiment. The mobile packet communication system 100 of this embodiment includes the base transceiver stations 20 which performs wireless packet communication of the CDMA (Code Division Multiple Access) system with the mobile stations 10, and the radio network controller 30 which controls these base transceiver stations 20 and is connected to the switching apparatus 40.

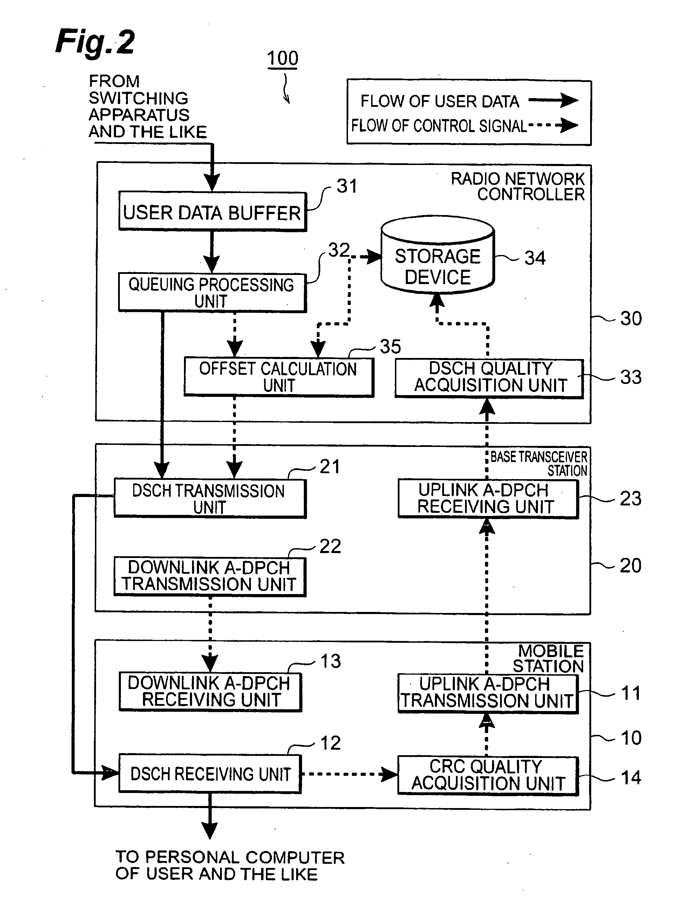

Fig. 2 is a diagram showing structures of the mobile station 10, the base transceiver station 20 and the radio network controller 30 of this embodiment. The radio network controller 30 includes the user data buffer 31 for temporarily storing user data (data signal) which arrive from a trunk network side through the switching apparatus 40 and are addressed to the respective mobile stations 10, and the queuing processing unit 32 which sends this user data to the corresponding base transceiver station 20 and allowing the base transceiver station 20 to transmit the user data to the mobile station 10 while controlling sending order of the user data.

The base transceiver station 20 includes the Downlink A-DPCH transmission unit (dedicated channel transmitting means) 22 which transmits a control signal to the mobile station 10 by predetermined transmission power through a Downlink A-DPCH (dedicated channel). Moreover, the base transceiver station 20 includes the DSCH transmission unit (shared channel transmitting means) 21 which receives user data sent from the queuing processing unit 32 of the radio network controller 30 and transmits this user data to the mobile station 10 through a DSCH (shared (common) channel). This DSCH transmission unit 21 controls the transmission power of the DSCH as a value obtained by adding a predetermined offset value to the transmission power of the Downlink A-DPCH (this will be described later in detail).

Here, the DSCH is a channel which is shared among a plurality of the mobile stations 10 and transmits data signals addressed to the plurality of mobile stations 10 in a manner that the data signals are not overlapped in terms of time, that is, in a manner of splitting the data signals into time-specific segments. The Downlink A-DPCH is a channel which is allocated individually to each mobile station 10 and transmits the control signal addressed to the mobile station 10.

The mobile station 10 includes the Downlink A-DPCH receiving unit 13 which receives the control signal transmitted from the Downlink A-DPCH transmission unit 22 of the base transceiver station 20. Moreover, the mobile station 10 includes the DSCH receiving unit 12 which receives the user data transmitted from the DSCH transmission unit 21 of the base transceiver station 20 and sends the received user data to a data processing device such as a personal computer (not shown), based on the control signal received at the Downlink A-DPCH receiving unit 13.

Moreover, the mobile station 10 of the mobile packet communication system 100 of this embodiment includes the CRC quality acquisition unit (mobile station side shared channel quality acquiring means) 14 which subjects the user data received by the DSCH receiving unit 12 to a CRC check to detect a block error rate, a bit error rate and the like, and acquires results of these as quality information of the DSCH. In addition, the mobile station 10 includes the Uplink A-DPCH transmission unit (shared channel quality transmitting means) 11 which transmits the user data from the mobile station 10 and a control signal containing the acquired quality information of the DSCH to the base transceiver station 20 by use of the Uplink A-DPCH channel. Here, the Uplink A-DPCH is a channel individually allocated to each mobile station 10.

The base transceiver station 20 includes the Uplink A-DPCH receiving unit 23 which receives the user data and the control signal transmitted from the Uplink A-DPCH transmission unit 11.

### 074

The radio network controller 30 of the mobile packet communication system 100 of this embodiment includes the DSCH quality acquisition unit (controller side shared channel quality acquiring means) 33 which acquires the quality information of the DSCH received by the Uplink A-DPCH receiving unit 23 of the base transceiver station, and the storage device (storing means) 34 which stores the acquired quality information of the DSCH in association with the ID of the mobile station 10 and stores an offset value of the transmission power of the DSCH for each ID of the mobile station 10.

Furthermore, the radio network controller 30 includes the offset calculation unit (first offset value controlling means, shared channel transmission power controlling means) 35 which acquires the quality information of the DSCH of the mobile station 10 corresponding to the user data to be transmitted by the DSCH and the offset value of the transmission power of the DSCH, base on an instruction from the queuing processing unit 32. The offset calculation unit 35 increases the offset value by a predetermined amount T when there is deterioration in the quality, but decreases the offset value by a predetermined amount S when there is no deterioration in the quality. The offset calculation unit 35 then stores a new offset value in the storage device 34 in association with the ID of the mobile station 10, and sends the new offset value to the DSCH transmission unit 21 of the base transceiver station 20. Note that, arbitrary values can be given for the values of these S and T. S may be set equal to T, or S may not be equal to T.

Next, operation of the mobile packet communication system 100 of this embodiment will be described, and in combination therewith, procedures of the radio network control method according to this embodiment of the present invention will be described. Note that, in Fig. 2, the solid arrows indicate flows of user data, and the broken arrows indicate flows of control signals. Here, for simplicity, description will be started from the completion of the transmission of the user data from the DSCH transmission unit 21 of the base transceiver station 20 to the DSCH receiving unit 12 of the mobile station 10.

The CRC quality acquisition unit 14 of the mobile station 10 subjects the user data received by the DSCH receiving unit 12 to the CRC check, and acquires the block error rate, the bit error rate and the like as the quality information of the DSCH. The Uplink A-DPCH transmission unit 11 of the mobile station 10 then transmits the control signal containing this quality information of the DSCH to the Uplink A-DPCH receiving unit 23 of the base transceiver station 20 over the Uplink A-DPCH channel.

Next, the DSCH quality acquisition unit 33 of the radio network controller 30 acquires the quality information from the Uplink A-DPCH receiving unit 23 of the base transceiver station 20, and the storage device 34 stores this quality information of the DSCH in association with the ID of the mobile station 10.

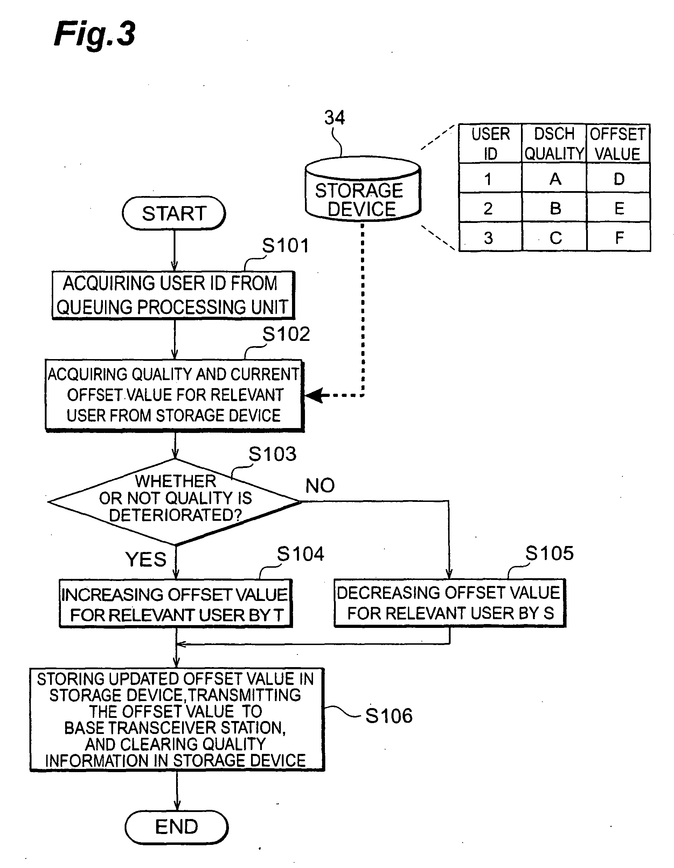

Subsequently, the queuing processing unit 32 transmits the next user data to the DSCH transmission unit 21 of the base transceiver station 20. At this time, the offset calculation unit 35 of the radio network controller 30 performs the operation as shown in the flowchart of Fig. 3.

Specifically, the offset calculation unit 35 first acquires the ID of the mobile station 10 to become a relevant destination from the queuing processing unit 32 in Step 101 (S101).

Next, the offset calculation unit 35 acquires the quality information of the DSCH of the mobile station 10 corresponding to this ID and an offset value at the previous transmission of user data from the storage device 34 in Step 102 (S102).

Next, the offset calculation unit 35 determines whether or not the communication quality of the DSCH is deteriorated based on the quality information of the DSCH in Step 103 (S103). When the communication quality of the DSCH is deteriorated, the operation proceeds to Step 104 (S104), where the offset value is increased by a predetermined amount T. On the other hand, when the communication quality is not deteriorated, the operation proceeds to Step 105 (S105), where the offset value is decreased by a predetermined amount S. This determination on the deterioration of the communication quality can be made by, for example, determining whether or not the block error rate and the bit error rate in the CRC check exceed predetermined values.

Next, in Step 106, the offset calculation unit 35 allows the storage device 34 to store the new offset value in association with the ID of the mobile station 10, and to clear the quality information of the DSCH of the relevant mobile station 10 in the storage device 34. At the same time, the offset calculation unit 35 sends the new offset value to the DSCH transmission unit 21 of the base transceiver station 20.

Note that the quality information of the DSCH from the mobile station 10 may be thought to be delayed in reaching the radio network controller 30. In this case, the offset calculation unit 35 cannot acquire the quality information of the DSCH of the mobile station 10 and cannot determine whether or not the communication quality of the DSCH is deteriorated. Therefore, the offset calculation unit 35 does not change the offset value when the offset calculation unit 35 cannot acquire the quality information.

The DSCH transmission unit 21 sets a value obtained by adding this offset value to the transmission power of the Downlink A-DPCH transmitted by the Downlink A-DPCH transmission unit 22 as the transmission power of the DSCH, and transmits the user data to the DSCH receiving unit 12 of the mobile station 10 by this transmission power.

Next, the effect and advantages of the mobile packet communication system 100 according to this embodiment will be described.

In the mobile packet communication system 100 of this embodiment, the DSCH quality acquisition unit 33 of the radio network controller 30 acquires information regarding the reception quality of the DSCH, and the offset calculation unit 35 allows the DSCH transmission unit 21 of the base transceiver station 20 to further control the transmission power of the DSCH based on the information regarding the reception quality of the DSCH. Thus, it is made possible to optimize this transmission power of the DSCH while restricting the deterioration in the reception quality.

Moreover, the storage device 34 of the radio network controller 30 stores the information regarding the reception quality of the shared channel, which is acquired by the DSCH quality acquisition unit 33, in association with the mobile station 10. The offset calculation unit 35 controls the DSCH transmission unit 21 of the base transceiver station 20 based on the information regarding the reception quality of the shared channel, which is stored in the storage device 34. Thus, it is made possible for the offset calculation unit 35 to read this information regarding the reception quality of the DSCH when needed. Therefore, the control of the transmission power of the DSCH for each mobile station 10 is suitably performed.

Moreover, since the DSCH quality acquisition unit 33 acquires a result of the CRC check on the data signal received through the DSCH as the information regarding the reception quality of the DSCH in the mobile station 10, the control of the transmission power of the DSCH is suitably performed.

Furthermore, the offset calculation unit 35 of the radio network controller 30 increases the offset value of the transmission power of the DSCH when the reception quality of the DSCH does not satisfy a predetermined criterion, and decreases the offset value of the transmission power of the DSCH when the reception quality of the DSCH satisfies the criterion. In addition, the DSCH transmission unit 21 of the base transceiver station 20 controls the transmission power of the DSCH to be the value obtained by adding the offset value to the transmission power of the Downlink A-DPCH. Thus, the control of the transmission power of the DSCH is performed easily and efficiently.

Further, the offset calculation unit 35 does not perform increase and decrease of the transmission power of the DSCH based on the reception quality of the DSCH when the offset calculation unit 35 cannot acquire the information regarding the reception quality of the DSCH. Therefore, when the offset calculation unit 35 cannot acquire the information regarding the reception quality of the DSCH, the offset value necessary to acquire the transmission power of the DSCH is not changed but maintained. Accordingly, unnecessary variations of the transmission power of the DSCH are restricted, and the transmission of the data signal by the DSCH is stably performed.

### (Second embodiment)

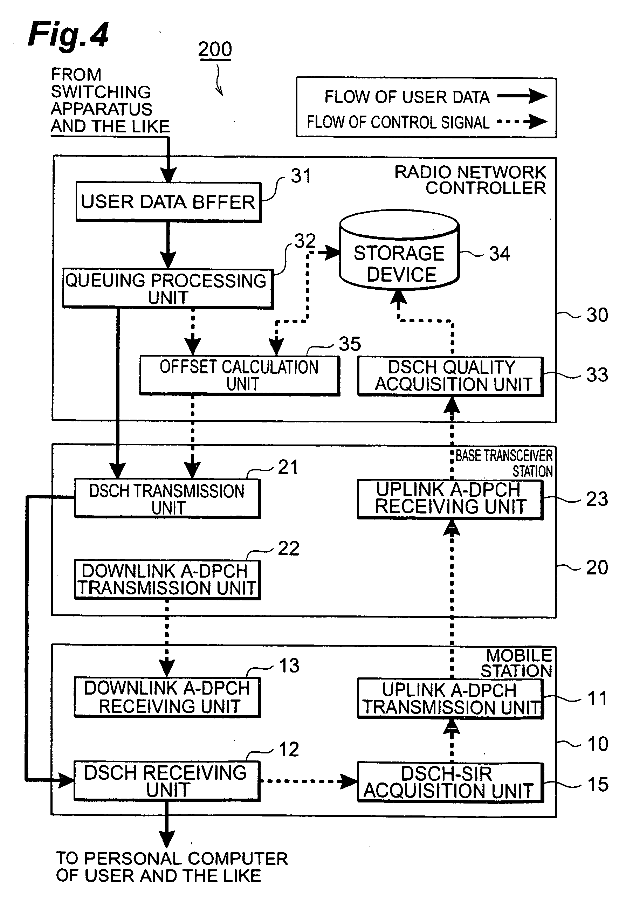

Next, the mobile packet transmission system 200 according to a second embodiment will be described with reference to Fig. 4.

The mobile packet communication system 200 of this embodiment is different from the mobile packet communication system 100 of the first embodiment in that the mobile station 10 includes the DSCH-SIR acquisition unit (mobile station side shared channel quality acquiring means) 15 which acquires an SIR (signal to interference ratio) of the DSCH received by the DSCH receiving unit 12 as the reception quality of the DSCH in place of the CRC quality acquisition unit 14.

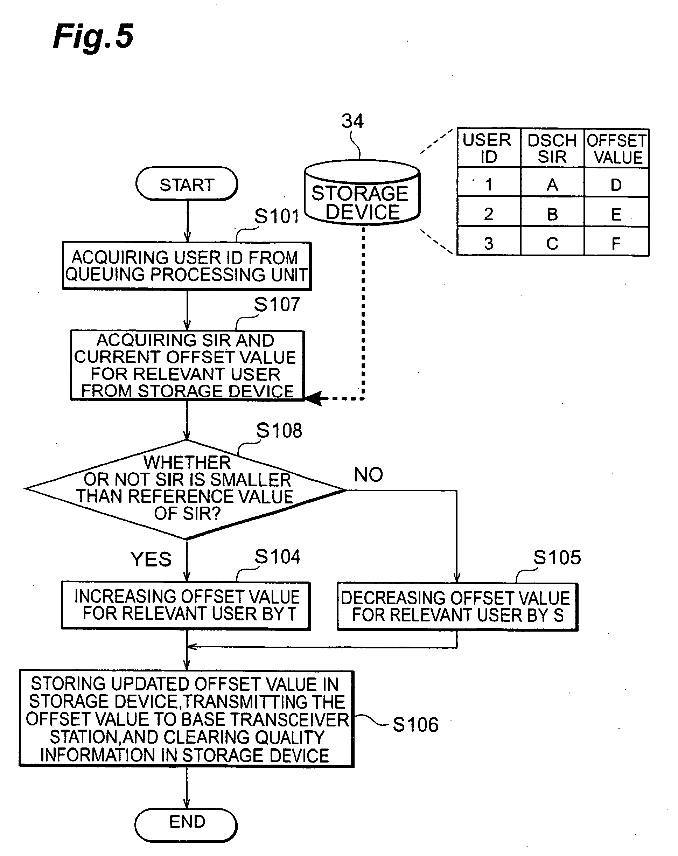

In the mobile packet communication system of the second embodiment, as described above, the SIR of the DSCH acquired by the DSCH-SIR acquisition unit 15 is stored in the storage device 34 through the Uplink A-DPCH transmission unit 11, the Uplink A-DPCH receiving unit 23 and the DSCH quality acquisition unit 33. As shown in Fig. 5, in Step 107 (S107), the offset calculation unit 35 acquires, from the storage device 34, an offset value at the previous transmission of user data and the SIR of the DSCH of the mobile station 10 as the quality information of the DSCH concerning the mobile station 10 corresponding to the ID. Then, in Step 108 (S108), the offset calculation unit 35 compares the acquired SIR with a preset reference value of the SIR. When the acquired SIR is smaller than the reference value of the SIR, that is, when the communication quality is deteriorated, the operation proceeds to Step 104, where the offset value is increased by a predetermined amount T. On the other hand, when the SIR of the user data is equal to or larger than the reference value of the SIR, that is, when the communication quality is not deteriorated, the operation proceeds to Step 105, where the offset value is lowered by a predetermined amount S.

In this embodiment, the information regarding the SIR of the DSCH is acquired as the information regarding the reception quality of the DSCH in the mobile station 10. Therefore, the control of the transmission power of the DSCH is suitably performed similarly to the first embodiment.

### (Third embodiment)

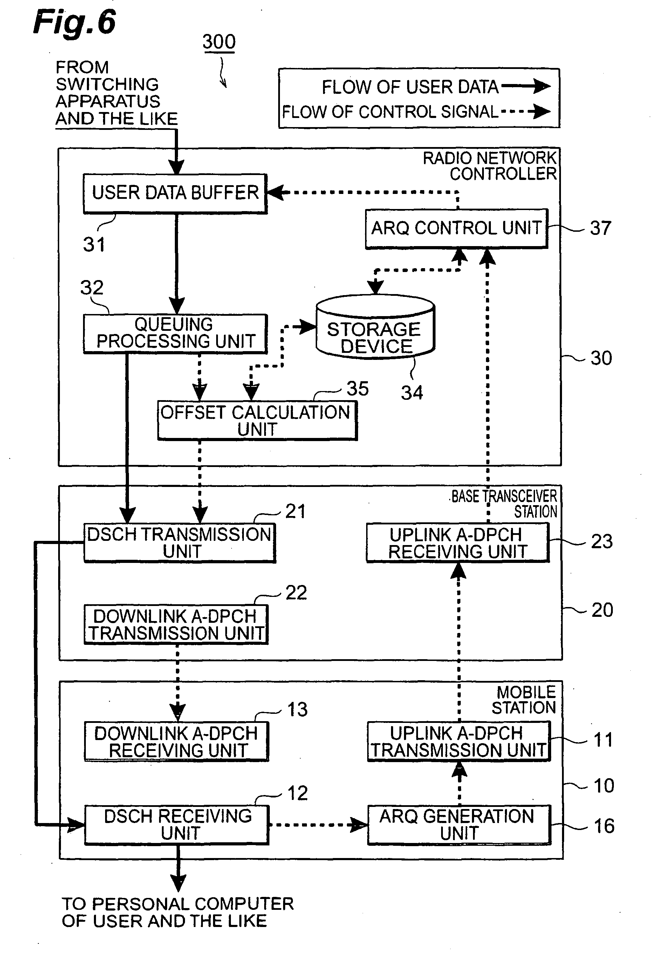

Next, the mobile packet communication system 300 according to a third embodiment will be described with reference to Fig. 6.

A first different point of the mobile packet communication system 300 of this embodiment from the mobile packet communication system 100 of the first embodiment is that the mobile station 10 includes, in place of the CRC quality acquisition unit 14, the ARQ generation unit (mobile station side shared channel quality acquiring means) 16 which checks a data error of user data received by the DSCH receiving unit 12, and generates a negative acknowledgement signal (hereinafter, NAK) requesting a retransmission of the data when there is an error in the data, but generates an acknowledgement signal (hereinaf ter, ACK) indicating that the retransmission is unnecessary when the data has been received without any error, thus generating an ARQ control signal for user data retransmission control.

Moreover, a second different point is that the radio network controller 30 includes, in place of the DSCH quality acquisition unit 33, the ARQ control unit (controller side shared channel quality acquiring means) 37 which acquires the ARQ control signal as the information regarding the reception quality of the DSCH from the Uplink A-DPCH receiving unit 23 of the base transceiver station 20, and instructs the user data buffer 31 to clear the user data sent to the relevant mobile station 10 when acquiring the ACK, but allows the user data buffer 31 to retransmit the same user data when acquiring the NAK, and allows the storage device 34 to store the type of this ARQ control signal and the repeated number of the same type of ARQ control signal in association with the ID of the mobile station 10.

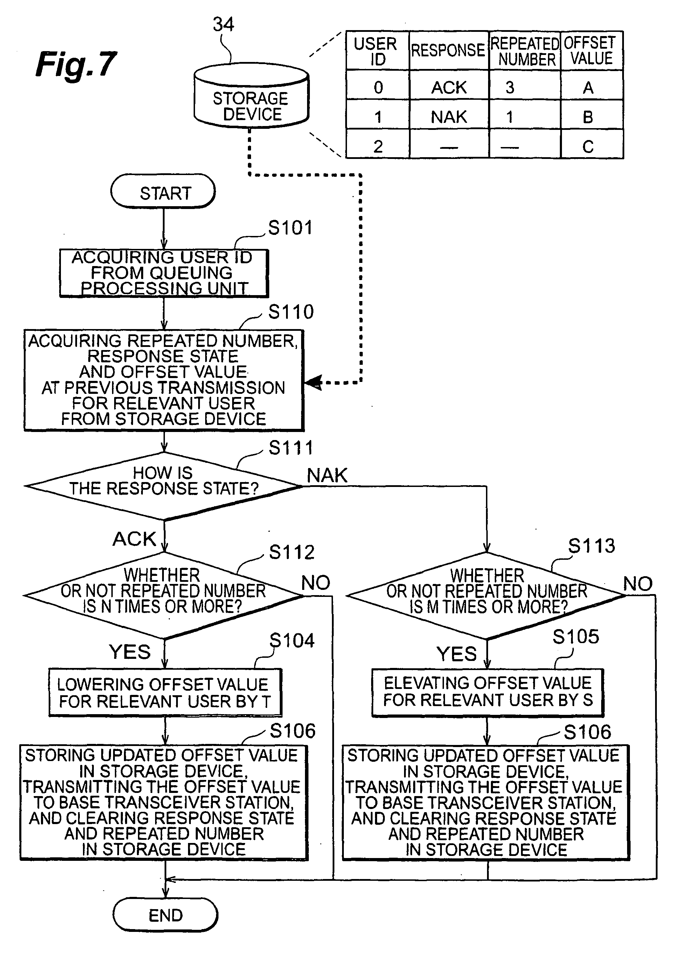

In the mobile packet communication system 300 described above, the ARQ generation unit 16 generates the ARQ control signal that is either the ACK or the NAK based on the user data received by the DSCH receiving unit 12, the Uplink A-DPCH transmission unit 11 then transmits this ARQ control signal to the ARQ control unit 37 through the Uplink A-DPCH receiving unit 23. Therefore, the ARQ control unit 37 controls the user data buffer 31 for the data retransmission and the storage device 34 for the storage. As shown in the flowchart of Fig. 7, the offset calculation unit 35 first acquires, concerning the mobile station 10 corresponding to the ID, the type of the ARQ control signal based on the user data of the DSCH, the repeated number of the same response and the offset value at the previous transmission of the user data from the storage device 34 in Step 110 (S110).

Then, in Step 111 (S111), the offset calculation unit 35 determines which the ARQ control signal is, the ACK or the NAK. When the ARQ control signal is the ACK, the operation proceeds to Step 112 (S112), where the offset calculation unit 35 performs determination based on the repeated number of the ACK. When the repeated number is N or more, the operation proceeds to Step 104, where the offset calculation unit 35 decreases the offset value by an amount T. Further, in Step 106, the offset calculation unit 35 allows the storage device 34 to store a new offset value in association with the ID of the mobile station 10 and to clear the quality information of the user data of the relevant mobile station 10 in the storage device 34. At the same time, the offset calculation unit 35 sends the new offset value to the DSCH transmission unit 21 of the base transceiver station 20. When the repeated number is less than N, the processing of the offset calculation unit 35 is ended without changing the value of the offset.

On the other hand, when the ARQ control signal is the NAK, the operation proceeds to Step 113 (S113), where the offset calculation unit 35 performs determination based on the repeated number of the NAK. When the repeated number is M or more, the operation proceeds to Step 105, where the offset calculation unit 35 decreases the offset value by an amount S. Further, in Step 106, the offset calculation unit 35 allows the storage device 34 to store a new offset value in association with the ID of the mobile station 10 and to clear the quality information of the user data of the relevant mobile station 10 in the storage device 34. At the same time, the offset calculation unit 35 sends the new offset value to the DSCH transmission unit 21 of the base transceiver station 20. When the repeated number is less than M, the processing is ended without changing the value of the offset. Note that, arbitrary values can be given for the values of these M and N. M may be set equal to N, or not equal to N.

As described above, the control of the transmission power of the DSCH is suitably performed similarly to the first embodiment by acquiring the reception quality of the DSCH based on the control signal of the ARQ.

### (Fourth embodiment)

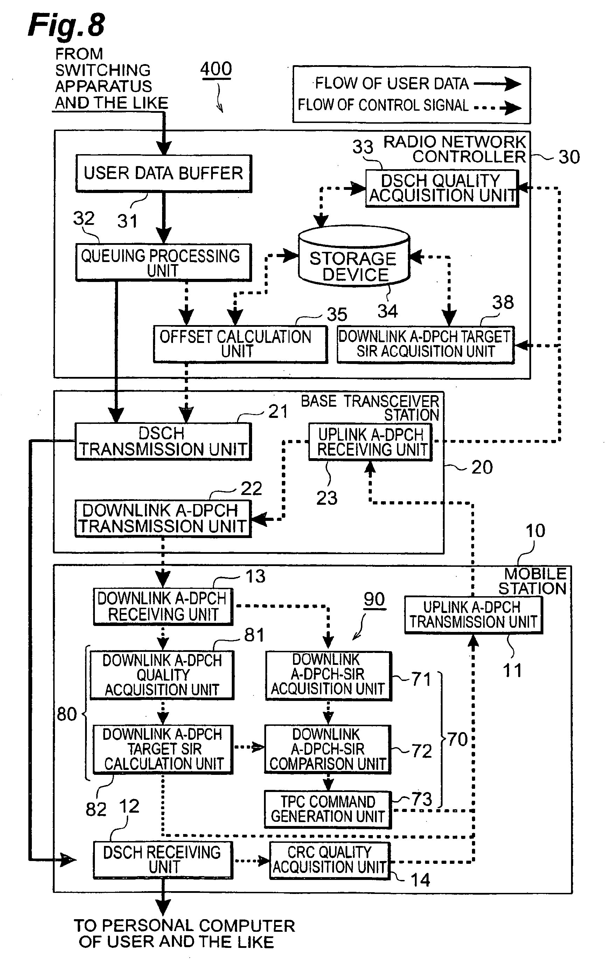

Next, the mobile packet communication system 400 according to a fourth embodiment will be described with reference to Fig. 8.

Different points of the mobile packet communication system 400 of this embodiment from the mobile packet communication system 100 of the first embodiment are that the mobile station 10 includes the Downlink A-DPCH transmission power control command generation unit (dedicated channel transmission power control signal generating means) 90 composed of the TPC device 70 generating a control command (hereinafter, TPC control command) of the transmission power of the Downlink A-DPCH for the base transceiver station 20 based on a difference between an SIR of the Downlink A-DPCH and a target SIR value of the Downlink A-DPCH, and of the so-called outer loop control device 80 controlling the target SIR value of the Downlink A-DPCH in this TPC control based on the quality of the received data of the Downlink A-DPCH, and that the radio network controller 30 includes the Downlink A-DPCH target SIR acquisition unit (signal to interference ratio target value acquiring means) 38 acquiring the target SIR of the Downlink A-DPCH, which is controlled by the outer loop control device 80, and allowing the storage device 34 to store a variation of the target SIR in relation to the ID of the mobile station 10.

Here, the TPC device 70 includes the Downlink A-DPCH-SIR acquisition unit 71 acquiring the SIR of the Downlink A-DPCH received by the Downlink A-DPCH receiving unit 13, the Downlink A-DPCH-SIR comparison unit 72 comparing the acquired SIR of the Downlink A-DPCH with the target SIR of the Downlink A-DPCH, and the TPC command generation unit 73 generating a control command instructing the increase and decrease of the transmission power of the Downlink A-DPCH based on a result of the comparison and sending the control command to the Uplink A-DPCH transmission unit 11.

Meanwhile, the outer loop control device 80 includes the Downlink A-DPCH quality acquisition unit 81 acquiring a frame error rate and the like as the quality of the control data of the Downlink A-DPCH received by the Downlink A-DPCH receiving unit 13, and the Downlink A-DPCH target SIR calculation unit 82 performing the increase and decrease of the Downlink A-DPCH target SIR of the Downlink A-DPCH-SIR comparison unit 72 based on the acquired quality of the control data of the Downlink A-DPCH and sending this Downlink A-DPCH target SIR to the Uplink A-DPCH transmission unit 11.

Then, in the mobile packet communication system 400 as described above, the Downlink A-DPCH receiving unit 13 of the mobile station 10 receives the Downlink A-DPCH transmitted from the Downlink A-DPCH transmission unit 22 of the base transceiver station 20 by the predetermined transmission power, the TPC device 70 and the outer loop control device 80 generates a TPC command for increasing and decreasing the transmission power of the Downlink A-DPCH based on the SIR of the Downlink A-DPCH and the quality of the control data of the Downlink A-DPCH, the Uplink A-DPCH transmission unit 11 transmits this TPC command to the Uplink A-DPCH receiving unit 23 of the base transceiver station 20, and the Downlink A-DPCH transmission unit 22 controls the transmission power of the Downlink A-DPCH based on this TPC command. Therefore, this transmission power of the Downlink A-DPCH is controlled to the optimal value.

Moreover, the Uplink A-DPCH transmission unit 11 transmits the Downlink A-DPCH target SIR acquired by the Downlink A-DPCH target SIR calculation unit 82 to the Uplink A-DPCH receiving unit 23, and the Downlink A-DPCH target SIR acquisition unit 38 acquires this Downlink A-DPCH target SIR and allows the storage device 34 to store the Downlink A-DPCH target SIR in association with the ID of the mobile station 10 in addition to the quality information of the DSCH.

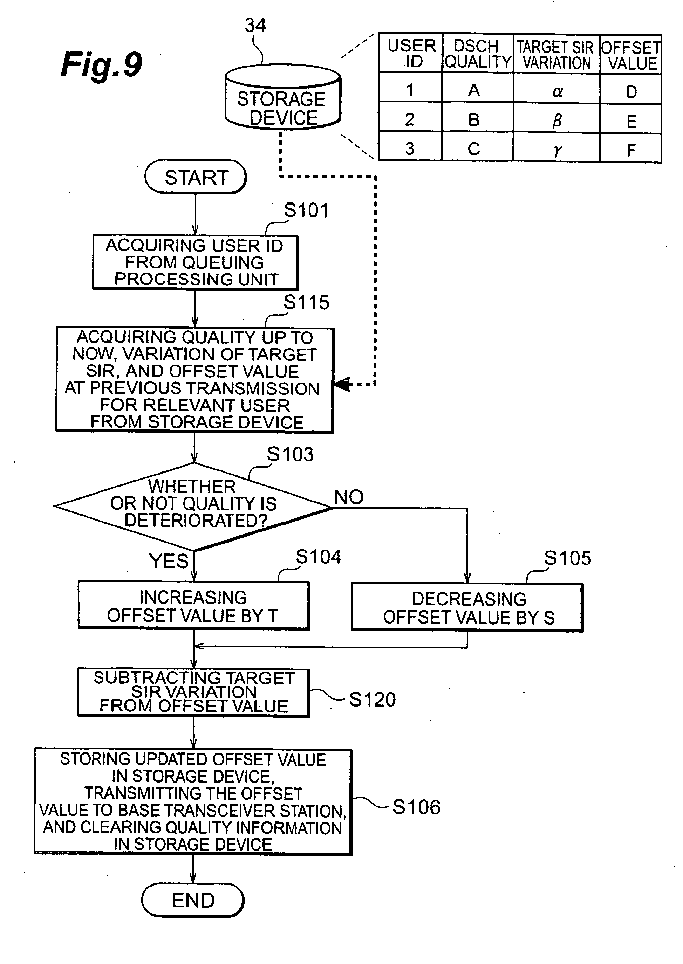

Then, as shown in the flowchart of Fig. 9, as the second offset value controlling means, the offset calculation unit 35 first acquires the quality information of the DSCH, the variation D of the target SIR and the offset value at the previous transmission, which are of the mobile station 10 corresponding to the ID, from the storage device 34 in Step 115 (S115). Then, the offset calculation unit 35 determines whether or not the quality is deteriorated in Step 103 (S103).

Then, when the quality is deteriorated, the operation proceeds to Step 104 (S104), where the offset value is increased by the amount T, and when the quality is not deteriorated, the operation proceeds to Step 105 (S105), where the offset value is decreased by the amount S.

Next, in Step 120 (S120), the variation D of the target SIR is further subtracted from the offset value to obtain a new offset value. Here, the amounts S and T are constantly positive values, S may be set equal to T or not, and D is a positive or negative value. Specifically, if D is larger than 0, the offset value will be decreased, and if D is smaller than 0, the offset value will be increased.

In the mobile packet communication system 400 described above, the optimization of the transmission power of the Downlink A-DPCH from the base transceiver station 20 to the mobile station 10 is performed by the TPC device 70 and the outer loop control device 80. However, when the target SIR of the Downlink A-DPCH is changed in this outer loop control, in some cases, the transmission power of the Downlink A-DPCH is radically changed accompanied with this change. Then, there is a possibility that the change of the transmission power of the DSCH based on the change of the transmission power of the Downlink A-DPCH and the change of the transmission power of the DSCH based on the information regarding the reception quality of the DSCH may occur at the same time in the control of the transmission power of the DSCH, thus causing a radical variation in the transmission power of the DSCH.

However, according to the mobile packet communication system 400 of this embodiment, it is made possible by the radio network controller 30 to acquire the information regarding the target value of the SIR of the Downlink A-DPCH, to further control the transmission power of the DSCH based on this information regarding the target value of the SIR, and to adjust the increasing and decreasing range of the transmission power of the DSCH while taking account of the change of the transmission power of the Downlink A-DPCH due to the change of the target value of the SIR of the Downlink A-DPCH. Therefore, it is made possible to optimize the transmission power of the DSCH more suitably.

Moreover, the increase and decrease of the offset value are performed based on the information regarding the reception quality of the DSCH, and the transmission power of the DSCH is controlled as the value obtained by adding the offset value to the transmission power of the Downlink A-DPCH. Thus, the control of the transmission power of the DSCH is performed easily and efficiently. Then, when the Downlink A-DPCH target SIR is increased/decreased, an amount regarding the increase/decrease of this Downlink A-DPCH target SIR is subtracted from the offset value. Therefore, the amount of the increase/decrease of the transmission power of the Downlink A-DPCH, which is changed accompanied with this increase/decrease of the Downlink A-DPCH target SIR, can be subtracted from the variation of the offset in advance, and the radical variation in the transmission power of the DSCH can be restricted.

### (Fifth embodiment)

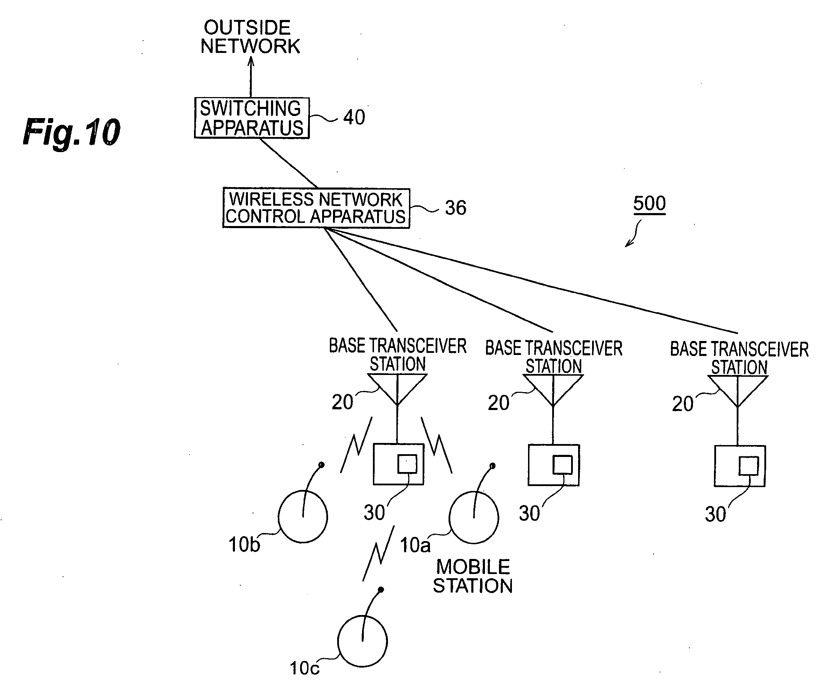

Fig. 10 shows a main configuration of the mobile packet communication system 500 of a fifth embodiment. In the mobile packet communication system 500 according to this embodiment, the IMT-2000 packet communication system using the HSDPA (High Speed Downlink Packet Access) is used. In this HSDPA, adaptive control for the transmission rate and coding method of the data signal, hybrid ARQ, that is, a transmission method in which retransmission control and error coding are combined, and the like are used. Furthermore, transmission scheduling of a user data packet is performed in each base transceiver station (BTS: Base Transceiver Station), thus enabling high speed scheduling. This HSDPA is described in detail in, for example, "Physical channels and mapping of transport channels onto physical channels (FDD) (Release 5)" 3GPP TS25.211 V5.1.0 (2002-06), "Multiplexing and channel coding (FDD) (Release 5)" 3GPP TS 25.212 V5.1.0 (2002-06), "Spreading and modulation (FDD) (Release 5)" 3GPP TS 25.213 V5.1.0 (2002-06), "Physical layer procedures (FDD) (Release 5)" 3GPP TS 25.214 V5.1.0 (2002-06), "Physical layer - Measurements (FDD) (Release 5) 3GPP TS 25.215 V5.0.0 (2003-03), which are technical specifications of 3rd Generation Partnership Project; Technical Specification Group Radio Access Network), and further in technical reports of the same project, which are "Physical layer aspects of UTRA High Speed Downlink Packet Access (Release 4) 3GPP TR 25.848 V4.0.0 (2001-03) and the like (refer to http://www.3gpp.org/ftp/Specs/latest/Rel-5/25_series/25211-510.zip/, 25212-510.zip, 25213-510.zip, 25214-510.zip, 25215-500.zip, http://www.3gpp.org/ftp/Specs/latest/Rel-4/25_series/25848-400.zip/ and the like).

The mobile packet communication system 500 will be described below in detail. As shown in Fig. 10, the mobile packet communication system 500 is a system enabling a packet communication of a user data signal to the mobile station. The mobile packet communication system 500 includes the mobile stations 10a, 10b and 10c carried and used by users and located in predetermined communication areas, the plurality of base transceiver stations 20 capable of directly performing wireless communications with these mobile stations 10a to 10c, the radio network controllers 30 provided individually in the base transceiver stations 20 and being capable of controlling the packet communications between the base transceiver stations 20 and the mobile stations 10a to 10c generally and individually, the switching apparatus 40 functioning as a relay point with an outside network, and the wireless network control apparatus 36 relaying signals between the switching apparatus 40 and the plurality of base transceiver stations 20. The mobile packet communication system 500 is configured to enable mutual communications between the switching apparatus 40 and the mobile stations 10a to 10c.

In this mobile packet communication system 500, three types of channels are used for transmitting signals from the base transceiver stations 20 to the mobile stations 10a to 10c. One is an HS-PDSCH (High Speed Physical Downlink Shared Channel), which is used for the packet transmission of the user data so as not to be overlapped in terms of time among the mobile stations 10a to 10c, that is, while being shared by time division. The HS-PDSCH requires a large transmission power, and is required to be high speed. Another one is an HS-SCCH (High Speed Shared Control Channel) (shared channel), which is shared among the mobile stations 10a to 10c by time division so as not to be overlapped in terms of time, used for transmitting an advance notice control signal (second signal) to the effect that a data transfer to a specified mobile station by the HS-PDSCH is started, and requires a relatively small transmission power. The last one is a Downlink A-DPCH (Associated Dedicated Physical Channel) (dedicated channel), which is set for each of the mobile stations 10a to 10c similarly to the mobile packet communication system 100 of the first embodiment, transmits a power control command (first signal) of the Uplink A-DPCH to each of the mobile stations 10a to 10c, and controls a transmission power thereof in a closed loop by the power control command from each of the mobile stations 10a to 10c.

Meanwhile, in uplinks from the mobile stations 10a to 10c to the base transceiver stations 20, power control commands of the Downlink A-DPCH, data signals and the like are transferred while being multiplexed to the Uplink A-DPCH set for each of the mobile stations 10a to 10c.

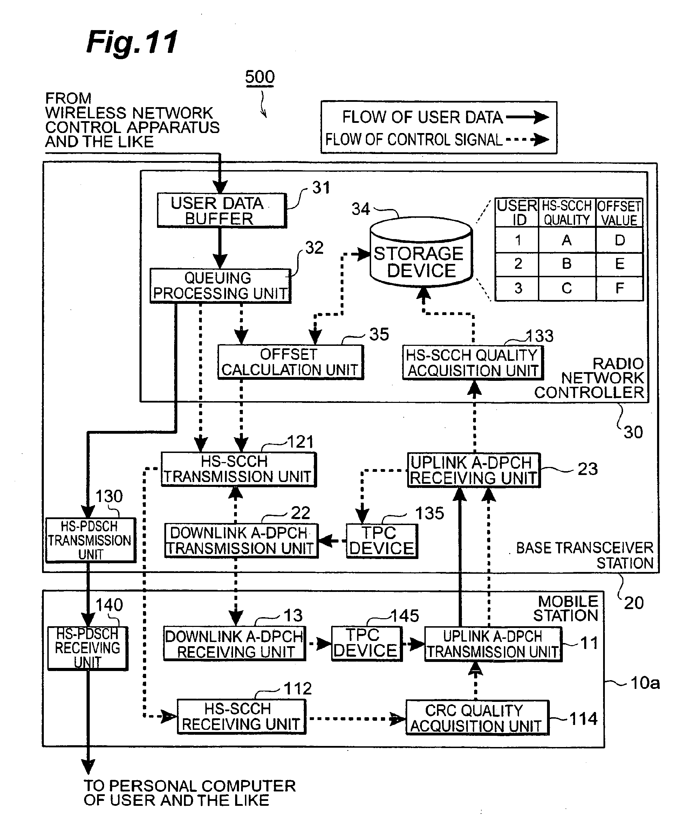

The internal configuration of the base transceiver station 20 will be described below in detail with reference to Fig. 11. The base transceiver station 20 includes the radio network controller 30, the HS-PDSCH transmission unit 130, the HS-SCCH transmission unit (shared channel transmitting means) 121, the Downlink A-DPCH transmission unit (dedicated channel transmitting means) 22, the Uplink A-DPCH receiving unit 23, and the TPC device 135.

The Uplink A-DPCH receiving unit 23 receives the user data and the control signal such as the power control command of the Downlink A-DPCH, which are transmitted from the Uplink A-DPCH transmission unit 11 of each of the mobile stations 10a to 10c by the Uplink A-DPCH.

The TPC device 135 controls the transmission power of the Downlink A-DPCH for each of the mobile stations 10a to 10c based on the power control commands of the Downlink A-DPCH from each of the mobile stations 10a to 10c, which are received by the Uplink A-DPCH receiving unit. Moreover, the TPC device 135 compares the reception quality of the Uplink A-DPCH from each of the mobile stations 10a to 10c, which is received by the Uplink A-DPCH receiving unit 23, with a predetermined target value, and generates the power control command of the Uplink A-DPCH for each of the mobile stations 10a to 10c.

The Downlink A-DPCH transmission unit (dedicated channel transmitting means) 22 transmits the power control command of the Uplink A-DPCH for each of the mobile stations 10a to 10c, which is generated by the TPC device 135, to each of the mobile stations 10a to 10c through the Downlink A-DPCH (dedicated channel) set for each of the mobile stations 10a to 10c by each predetermined transmission power. This predetermined transmission power is controlled by the TPC device 135.

The HS-PDSCH transmission unit 130 receives user data sent from the radio network controller 30, and transmits this user data to a specified mobile station set as a destination of the user data by the HS-PDSCH. This HS-PDSCH transmission unit 130 controls the transmission power of the HS-PDSCH as a predetermined fixed value.

The HS-SCCH transmission unit (shared channel transmitting means) 121 transmits the advance notice control signal (second signal) containing the ID of the specified mobile station as a destination of the user data to be sent by the HS-PDSCH, the number of these data, a transfer rate and the like to the specified mobile station by the HS-SCCH (shared channel) based on an instruction from the radio network controller 30 before the transmission of the user data by the HS-PDSCH is performed. This HS-SCCH transmission unit 121 controls the transmission power of the HS-SCCH as a value obtained by adding a predetermined offset value set for the specified mobile station set as the destination of the data by the HS-PDSCH in the relevant advance notice control signal to the transmission power of the Downlink A-DPCH for this specified mobile station (details are to be described later).

Meanwhile, each of the mobile stations 10a to 10c includes the Downlink A-PDCH receiving unit 13, the TPC device 145, the Uplink A-DPCH transmission unit 11, the HS-PDSCH receiving unit 140, the HS-SCCH receiving unit 112, and the CRC quality acquisition unit 114.

The Downlink A-DPCH receiving unit 13 receives, by the Uplink A-DPCH, the power control command (first signal) of the Uplink A-DPCH transmitted from the Downlink A-DPCH transmission unit 22 of the base transceiver station 20.

The TPC device 145 controls the transmission power of the Uplink A-DPCH transmitted by the Uplink A-DPCH transmission unit 11 based on the power control command of the Uplink A-DPCH received by the Downlink A-DPCH receiving unit 13. Moreover, the TPC device 145 generates the power control command of the Downlink A-DPCH based on the reception quality of the Downlink A-DPCH received by the Downlink A-DPCH receiving unit 13. Here, the TPC device 145 can generate the power control command, for example, based on a difference between the SIR of the Downlink A-DPCH and the target SIR value of the Downlink A-DPCH.

Here, the HS-SCCH receiving unit 112 receives the advance notice control signal of the user data transmission using the HS-PDSCH, which is transmitted from the HS-SCCH transmission unit 121 of the base transceiver station 20. Because the channel of the HS-PDSCH is shared among a plurality of users, each of the mobile stations 10a to 10c constantly monitors this HS-SCCH.

When the relevant mobile station 10a or the like is set as the destination of the HS-PDSCH in the advance notice control signal received by this HS-SCCH receiving unit 112, the HS-PDSCH receiving unit 140 receives, by the HS-PDSCH, the user data transmitted from the HS-PDSCH transmission unit 130 of the base transceiver station 20, and sends the received user data to a data processing apparatus such as a personal computer (not shown).

The CRC quality acquisition unit (mobile station side shared channel quality acquiring means) 114 subjects the advance notice control signal received by the HS-SCCH receiving unit 112 to the CRC check, detects a block error rate, a bit error rate and the like, and acquires results of these as the quality information of the HS-SCCH. Here, such acquisition of the quality information is performed only in the case where the relevant mobile station 10a or the like is set as the destination of the user data in the advance notice control signal.

The Uplink A-DPCH transmission unit (shared channel quality transmitting means) 11 transmits a signal containing the quality information of the HS-SCCH from the CRC quality acquisition unit 114, the power control command of the Downlink A-DPCH from the TPC device 145, the uplink user data and the like to the Uplink A-DPCH receiving unit 23 of the base transceiver station 20 by use of the Uplink A-DPCH.

The radio network controller 30 of the base transceiver station 20 is composed of the user data buffer 31, the queuing processing unit 32, the storage device 34, the offset calculation unit 35, and the HS-SCCH quality acquisition unit 133, which are interconnected by buses.

The user data buffer 31 temporarily stores the user data addressed to the mobile stations 10a to 10c, which arrive from a trunk network side through the wireless network control apparatus 36.

The queuing processing unit 32 sequentially transmits the user data in the user data buffer 31 to the HS-PDSCH transmission unit 130 while controlling a sending order of the user data, and allows the HS-PDSCH transmission unit 130 to transmit the user data to the a specified mobile station as the destination of the user data, that is, any of the mobile stations 10a to 10c. Moreover, the queuing processing unit 32 issues an instruction to the HS-SCCH transmission unit 121 and allows the HS-SCCH transmission unit 121 to transmit the above-described advance notice control signal to each of the mobile stations 10a to 10c. This transmission of the advance notice control signal is performed prior to the transmission of the user data. Furthermore, the queuing processing unit 32 issues an instruction to the offset calculation unit 35, and allows the offset calculation unit 35 to acquire the offset value of the transmission power of the advance notice control signal in the HS-SCCH transmission unit 121 (details will be described later).

The HS-SCCH quality acquisition unit (controller side shared channel quality acquiring means) 133 acquires the quality information of the HS-SCCH from the signal received by the Uplink A-DPCH receiving unit 23.

The storage device (storing means) 34 stores the acquired quality information of the HS-SCCH in relation to the ID of the mobile station corresponding to the quality information. Moreover, the storage device 34 stores the offset value of the transmission power of the HS-SCCH for each ID of the mobile stations 10a to 10c.

The offset calculation unit (first offset value controlling means, shared channel transmission power controlling means) 35 acquires the quality information of the HS-SCCH corresponding to the specified mobile station as the destination of the HS-PDSCH and the offset value of the transmission power of the HS-SCCH corresponding to the specified mobile station as the destination from the storage device 34 according to the instruction from the queuing processing unit 32. Then, the offset calculation unit 35 increases the offset value by the predetermined amount T when the quality is deteriorated, decreases the offset value by the predetermined amount S when the quality is not deteriorated, allows the storage device 34 to store a new offset value as a new offset value of the relevant mobile station 10a, and sends the new offset value to the HS-SCCH transmission unit 121. Note that, arbitrary values can be taken for the values of these S and T, and S may be set equal to T or not.

Next, the operation of the mobile packet communication system 500 of this embodiment will be described, and in combination therewith, the procedure of the radio network control method according to the embodiments of the present invention will be described. Note that, in Fig. 11, the solid arrows indicate a flow of the user data, and the broken arrows indicate flows of the variety of control signals. Here, description will be started from a state where the user data addressed to the mobile station 10a is transmitted from the wireless network control apparatus 36 to the user data buffer 31 and accumulated therein. Moreover, in the storage device 34, the information regarding the reception quality of the HS-SCCH in the mobile stations 10a to 10c when the HS-SCCH was transmitted to each of the mobile stations 10a to 10c set as the destinations of the user data in the past and the off set values used when the HS-SCCH was transmitted are stored for each user ID of the mobile stations 10a to 10c.

First, in Step 200 (S200), the queuing processing unit 32 of the base transceiver station 20 determines user data to be transmitted next from the user data accumulated in the user data buffer 31.

Next, in Step 201 (S201), the offset calculation unit 35 of the base transceiver station 20 acquires a user ID of a mobile station to become the destination of the user data from the queuing processing unit 32. Here, for the sake of convenience, the mobile station 10a is assumed to be the destination.

Next, in Step 202 (S202), the offset calculation unit 35 acquires the quality information of the HS-SCCH of the mobile station 10a becoming the destination of the user data and the offset value set for the mobile station 10a from the storage device 34 with reference to the user ID.

Next, in Step 203 (S203), the offset calculation unit 35 determines whether or not the communication quality of the HS-SCCH between the base transceiver station 20 and the mobile station 10a is deteriorated based on the quality information of the HS-SCCH. When the communication quality of the HS-SCCH is deteriorated, the operation proceeds to Step 204 (S204) where the offset value corresponding to the mobile station 10a is increased by the predetermined amount T, and when the communication quality is not deteriorated, the operation proceeds to Step 205 (S205), where the offset value is decreased by the predetermined amount S. This determination for the deterioration of the communication quality can be made by, for example, determining whether or not the block error rate and the bit error rate in the CRC check exceed predetermined values.

Next, in Step 206 (S206), the offset calculation unit 35 allows the storage device 34 to store the new offset value in relation to the user ID of the mobile station 10a and to clear the quality information of the HS-SCCH of the mobile station 10a in the storage device 34, while sending the new offset value to the HS-SCCH transmission unit 121.

Note that the quality information of the HS-SCCH from the mobile station 10a is assumed to reach the radio network controller 30 late, and that the quality information of the HS-SCCH of the mobile station 10a is assumed not to be stored in the storage device 34 because the transmission of the HS-SCCH to the mobile station 10a is never performed. In this case, the offset calculation unit 35 cannot acquire the quality information of the HS-SCCH of the mobile station 10a and cannot determine whether or not the communication quality of the HS-SCCH is deteriorated between the base transceiver station and the mobile station. Therefore, the offset calculation unit 35 does not change the offset value when the offset calculation unit 35 cannot acquire the quality information.

Then, the HS-SCCH transmission unit 121 sets a value obtained by adding this offset value to the transmission power of the Downlink A-DPCH transmitted to the mobile station 10a by the Downlink A-DPCH transmission unit 22 as the transmission power of the HS-SCCH, and transmits, to the mobile station 10a by this transmission power, the advance notice control signal to the effect that the data transmission by the HS-PDSCH is performed for the mobile station 10a (Step 221 (S221)).

Then, in the mobile station 10a, the HS-SCCH receiving unit 112 receives this advance notice control signal. Then, the CRC quality acquisition unit 114 of the mobile station 10a performs the CRC check for the user data received by the HS-SCCH receiving unit 112, and acquires the block error rate, the bit error rate and the like as the quality information of the HS-SCCH. Then, the Uplink A-DPCH transmission unit 11 of the mobile station 10a transmits this quality information of the HS-SCCH to the Uplink A-DPCH receiving unit 23 of the base transceiver station 20 by the Uplink A-DPCH channel.

The HS-SCCH quality acquisition unit 133 of the base transceiver station 20 acquires the quality information of the HS-SCCH through the Uplink A-DPCH receiving unit 23, and the storage device 34 stores this quality information of the HS-SCCH in relation to the user ID of the mobile station 10a (Step 223 (S223)).

Next, the queuing processing unit 32 transmits the user data addressed to the mobile station 10a to the HS-PDSCH transmission unit 130, and the HS-PDSCH transmission unit 130 transmits this user data to the mobile station 10a by use of the HS-PDSCH (Step 225 (S225)).

In response to this, the mobile station 10a receives the user data from the base transceiver station 20 by the HS-PDSCH.

Then, the flow as described above is repeated every time when the data in the user data buffer 31 is transmitted.

Note that, simultaneously with the flow as described above, the TPC device 135 of the base transceiver station 20 generates each power control command of the Uplink A-DPCH based on the Uplink A-DPCH from each of the mobile stations 10a to 10c, which is received by the Uplink A-DPCH receiving unit 23. The Downlink A-DPCH transmission unit 22 transmits this power control command of the Uplink A-DPCH to each of the corresponding mobile stations 10a to 10c by the Downlink A-DPCH. Moreover, the TPC device 145 of each of the mobile stations 10a to 10c generates each power control command of the Downlink A-DPCH based on the Downlink A-DPCH received by the Downlink a-DPCH receiving unit 13. The Uplink A-DPCH transmission unit 11 transmits this power control command of the Downlink A-DPCH to the Uplink A-DPCH receiving unit 23 of the base transceiver station 20. Then, the transmission power of the Downlink A-DPCH transmission unit 22 and the transmission power of the Uplink A-DPCH transmission unit 11 are controlled by the power control commands, respectively, and the transmission powers of the Uplink and Downlink A-DPCH will be constantly controlled to the optimal values in response to the link states between the base transceiver station 20 and the mobile stations 10a to 10c.

Subsequently, the operation and effect of the mobile packet communication system 500 according to this embodiment will be described.

In the mobile packet communication system 500 of this embodiment, the HS-SCCH quality acquisition unit 133 of the radio network controller 30 in the base transceiver station 20 acquires the information regarding the reception quality of the HS-SCCH, and the offset calculation unit 35 allows the HS-SCCH transmission unit 121 to control the transmission power of the HS-SCCH based on the information regarding the reception quality of the HS-SCCH in addition to the transmission power of the Downlink A-DPCH.

Specifically, the transmission power of the HS-SCCH for the mobile station 10a is controlled based on the reception quality of the HS-SCCH in the mobile station 10a in addition to the transmission power of the Downlink A-DPCH for the mobile station 10a.

Therefore, in comparison with the case where the transmission power of the HS-SCCH is controlled based only on the transmission power of the Downlink A-DPCH, it is made possible to control the transmission power of the HS-SCCH finely in accordance with the link state of the HS-SCCH, and it is made possible to optimize this transmission power of the HS-SCCH while restricting the deterioration of the reception quality.

Moreover, the storage device 34 of the radio network controller 30 stores the information regarding the reception quality of the HS-SCCH acquired by the HS-SCCH quality acquisition unit 133 in association with the mobile stations 10a to 10c which are the destinations of the HS-SCCH, and the offset calculation unit 35 controls the HS-SCCH transmission unit 121 based on the information regarding the reception quality of the HS-SCCH stored in the storage device 34. Therefore, it is made possible for the offset calculation unit 35 to read the information regarding the reception quality of the HS-SCCH in each of the mobile stations 10a to 10c according to needs. Accordingly, the control of the transmission power of the HS-SCCH for each of the mobile stations 10a to 10c is suitably performed.

Moreover, the HS-SCCH quality acquisition unit 133 acquires the result of the CRC check of the data signal received by the HS-SCCH as the information regarding the reception quality of the HS-SCCH in the mobile station 10a. Therefore, the control of the transmission power of the HS-SCCH is suitably performed.

Furthermore, the offset calculation unit 35 increases the offset value of the transmission power of the HS-SCCH when the reception quality of the HS-SCCH does not satisfy the given criteria, and decreases the offset value of the transmission power of the HS-SCCH when the reception quality of the HS-SCCH satisfies the criteria. The HS-SCCH transmission unit 21 controls the transmission power of the DSCH to be the value obtained by adding the offset value to the transmission power of the Downlink A-DPCH. Therefore, the control of the transmission power of the HS-SCCH is performed easily and efficiently.

In addition, when the offset calculation unit 35 cannot acquire the information regarding the reception quality of the HS-SCCH in the mobile station which is the destination of the user data, the offset calculation unit 35 does not increase or decrease the transmission power of the HS-SCCH based on the reception quality of the HS-SCCH. Therefore, when the offset calculation unit 35 cannot acquire the information regarding the reception quality of the HS-SCCH, the offset value required for acquiring the transmission power of the HS-SCCH is not varied but maintained, unnecessary variations of the transmission power of the HS-SCCH are restricted, and the transmission of the advance notice of the data signal by the HS-SCCH is stably performed.

### (Sixth embodiment)

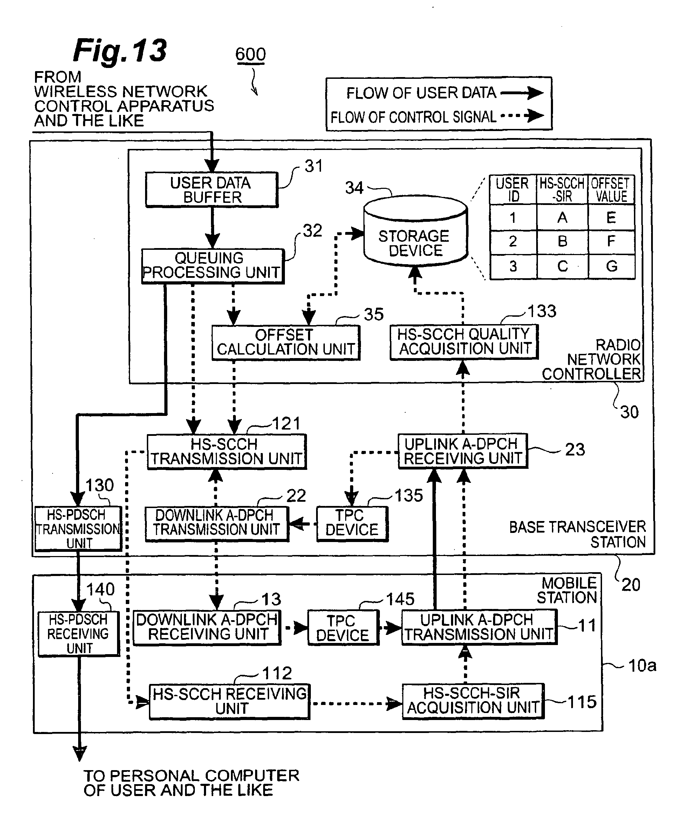

Subsequently, the mobile packet communication system 600 according to a sixth embodiment will be described with reference to Fig. 13.

A different point of the mobile packet communication system 600 of this embodiment from the mobile packet communication system 500 of the fifth embodiment is that each of the mobile stations 10a to 10c includes the HS-SCCH-SIR acquisition unit (mobile station side shared channel quality acquiring means) 115 in place of the CRC quality acquisition unit 114. This HS-SCCH-SIR acquisition unit 115 acquires an SIR (signal to interference ratio) of the HS-SCCH received by the HS-SCCH receiving unit 112 as the reception quality of the HS-SCCH.

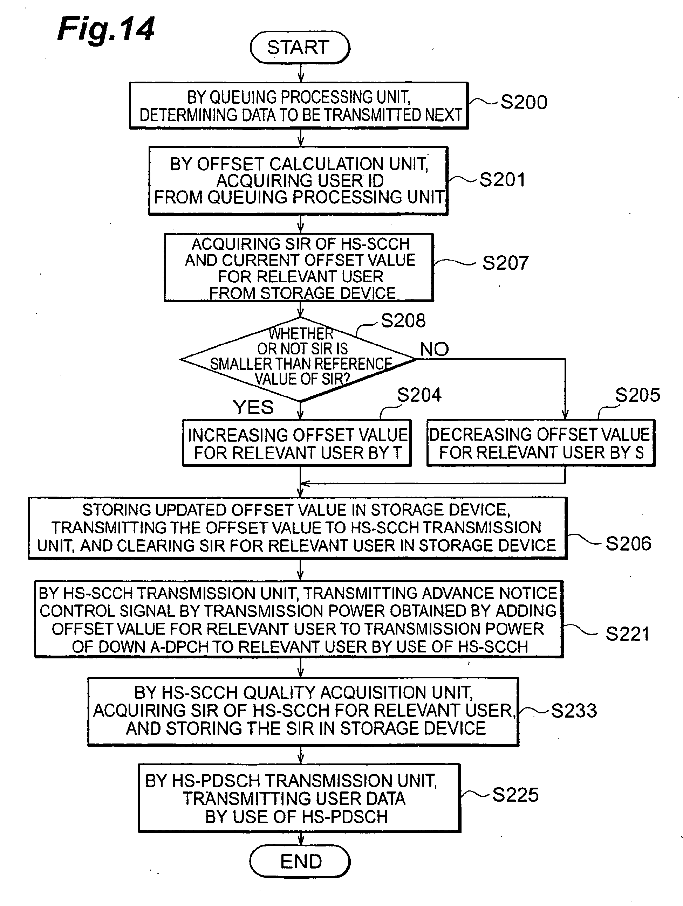

In the mobile packet communication system of the sixth embodiment, which is as described above, the SIR of the HS-SCCH, which is acquired by the HS-SCCH-SIR acquisition unit 115, is stored in the storage device 34 through the Uplink A-DPCH transmission unit 11, the Uplink A-DPCH receiving unit 23 and the HS-SCCH quality acquisition unit 133 for each user ID of the mobile station. Then, as shown in Fig. 14, the offset calculation unit 35 refers to the user ID, and acquires the offset value at the previous transmission of the HS-SCCH and the SIR of the HS-SCCH as the quality information of the HS-SCCH, which relate to the mobile station 10a which is the destination of the user data in Step 207 (S207).

Then, in Step 208 (S208), the offset calculation unit 35 compares the acquired SIR with a preset reference value of the SIR. When the acquired SIR is smaller than the reference value, that is, when the communication quality is deteriorated, the operation proceeds to Step 204, where the offset value is increased by the predetermined amount T. On the other hand, when the SIR of the user is equal to or larger than the reference value of the SIR, that is, when the communication quality is not deteriorated, the operation proceeds to Step 205, where the offset value is decreased by the predetermined amount S.

Then, in Step 206, the offset value is stored in the storage device 34 and transmitted to the HS-SCCH transmission unit 121, the SIR of the relevant user in the storage device is cleared, and in Step 221, the advance notice control signal is transmitted to the HS-SCCH.

Subsequently, in Step 233 (S233), the HS-SCCH quality acquisition unit 133 acquires the SIR of the HS-SCCH from the mobile station 10a and stores this SIR in the storage device 34 in association with the user ID.

In this embodiment as described above, the information regarding the SIR of the HS-SCCH is acquired as the information regarding the reception quality of the HS-SCCH in the mobile station 10a. Therefore, the control of the transmission power of the HS-SCCH is suitably performed similarly to the fifth embodiment.

### (Seventh embodiment)

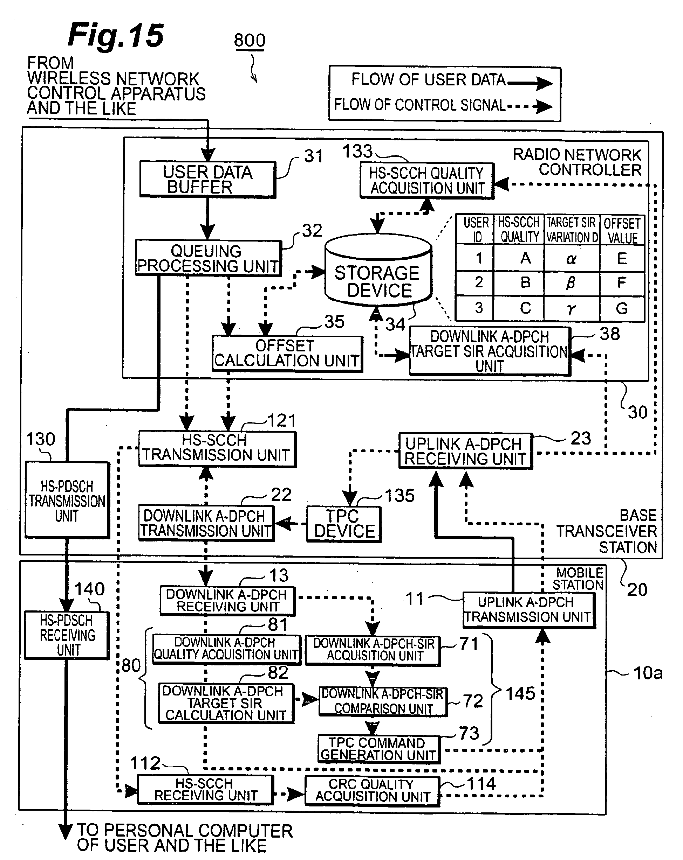

Next, the mobile packet communication system 800 according to a seventh embodiment will be described with reference to Fig. 15.

Different points of the mobile packet communication system 800 of this embodiment from the mobile packet communication system 500 of the fifth embodiment are a point that the mobile station 10a includes the so-called outer loop control device 80 controlling the target SIR value of the Downlink A-DPCH in the TPC control based on the quality of the received data of the Downlink A-DPCH in addition to the TPC device 145 generating the power control command of the transmission power of the Downlink A-DPCH for the base transceiver station 20 based on the difference between the SIR of the Downlink A-DPCH and the target SIR value of the Downlink A-DPCH, and a point that the radio network controller 30 includes the Downlink A-DPCH target SIR acquisition unit (signal power to interference power ratio target value acquiring means) 38 acquiring the target SIR of the Downlink A-DPCH, which is controlled by the outer loop control device 80, and allowing the storage device 34 to store the variation thereof in relation to the ID of the mobile station 10a.

Here, specifically, the TPC device 145 includes the Downlink A-DPCH-SIR acquisition unit 71 acquiring the SIR of the Downlink A-DPCH received by the Downlink A-DPCH receiving unit 13, the Downlink A-DPCH-SIR comparison unit 72 comparing the acquired SIR of the Downlink A-DPCH with the target SIR of the Downlink A-DPCH, and the TPC command generation unit 73 generating the control command instructing the increase and decrease of the transmission power of the Downlink A-DPCH based on a result of the comparison and sending the control command to the Uplink-A-DPCH transmission unit 11.

Moreover, the outer loop control device 80 includes the Downlink A-DPCH quality acquisition unit 81 acquiring the frame error rate and the like as the reception quality of the Downlink A-DPCH received by the Downlink A-DPCH receiving unit 13, and the Downlink A-DPCH target SIR calculation unit 82 performing the increase and decrease of the Downlink A-DPCH target SIR of the Downlink A-DPCH-SIR comparison unit 72 based on the acquired reception quality of the Downlink A-DPCH and sending this Downlink A-DPCH target SIR to the Uplink A-DPCH transmission unit 11.

Then, in the mobile packet communication system 800 as described above, the Downlink A-DPCH receiving unit 13 of the mobile station 10a receives the Downlink A-DPCH transmitted from the Downlink A-DPCH transmission unit 22 of the base transceiver station 20 by a predetermined transmission power, the power control command for the increase and decrease of the transmission power of the Downlink A-DPCH based on the SIR of the Downlink A-DPCH and the quality of the control signal of the Downlink A-DPCH is generated by the TPC device 70 and the outer loop control device 80, this power control command is transmitted to the Uplink A-DPCH receiving unit 23 of the base transceiver station 20 by the Uplink A-DPCH transmission unit 11, and the TPC device 135 controls the transmission power of the Downlink A-DPCH transmission unit 22 based on the power control command. Therefore, the transmission power of the Downlink A-DPCH is appropriately controlled by the optimal value in response to the link state.

Moreover, the Uplink A-DPCH transmission unit 11 transmits the new Downlink A-DPCH target SIR acquired by the Downlink A-DPCH target SIR calculation unit 82 to the Uplink A-DPCH receiving unit 23, and the Downlink A-DPCH target SIR acquisition unit 38 acquires this Downlink A-DPCH target SIR and allows the storage device 34 to store the variation D of the Downlink A-DPCH target SIR in association with the user ID of the mobile station 10a in addition to the quality information of the HS-SCCH.

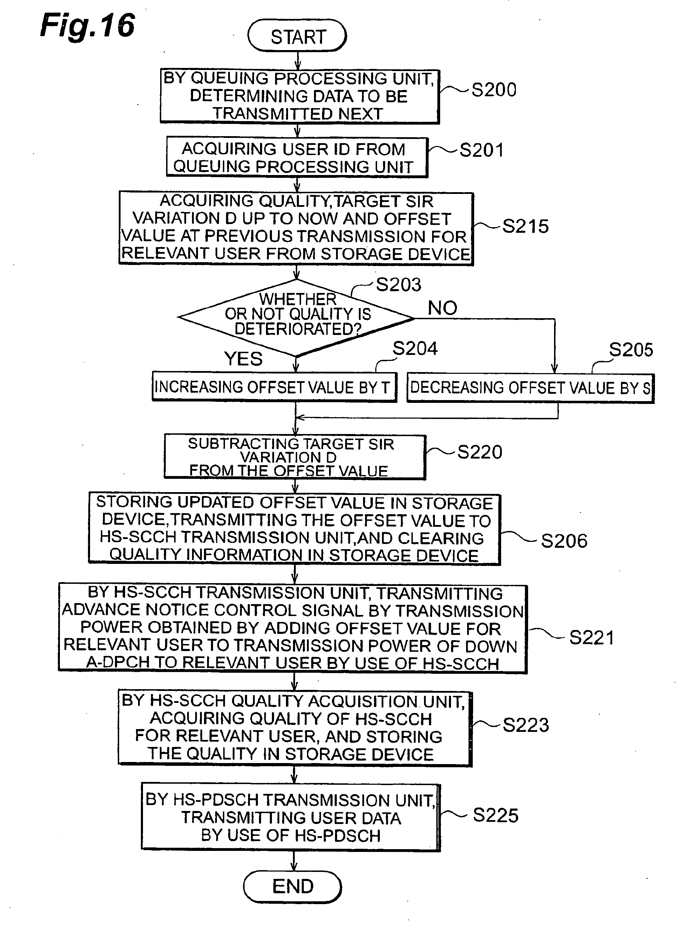

Then, as shown in the flowchart of Fig. 16, the offset calculation unit 35 of the base transceiver station 20, which serves as the second offset value controlling means, first acquires the quality information of the HS-SCCH, the variation D of the target SIR and the offset value at the previous transmission, which are of the mobile station 10a corresponding to the user ID, in Step 215 (S215), and in Step 203, determines whether or not the quality is deteriorated.

Then, when the quality is deteriorated, the operation proceeds to Step 204, where the offset value is increased by the amount T, and when the quality is not deteriorated, the operation proceeds to Step 205, where the offset value is decreased by the amount S.

Next, in Step 220 (S220), the variation D of the target SIR is further subtracted from the offset value to obtain a new offset value. Here, the amounts S and T are constantly positive values, S may be set equal to T or not, and D is a positive or negative value. Specifically, if D is larger than 0, the offset value will be decreased, and if D is smaller than 0, the offset value will be increased.

In the mobile packet communication system 800 as described above, more suitable optimization of the transmission power of the Downlink A-DPCH from the base transceiver station 20 to the mobile station 10a is performed by the TPC device 70 and the outer loop control device 80. However, in this outer loop control, when the target SIR of the Downlink A-DPCH is changed, in some cases, the transmission power of the Downlink A-DPCH is radically changed accompanied with this change. In this case, there is a possibility that this change of the transmission power of the HS-SCCH based on the change of the transmission power of the Downlink A-DPCH and this change of the transmission power of the HS-SCCH based on the information regarding the reception quality of the HS-SCCH conspire in the control of the transmission power of the HS-SCCH, thus causing a radical variation in the transmission power of the HS-SCCH.

However, according to the mobile packet communication system 800 of this embodiment, it is made possible by the radio network controller 30 to acquire the information regarding the target value of the SIR of the Downlink A-DPCH, to further control the transmission power of the HS-SCCH based on this information regarding the target value of the SIR, and to adjust the increasing and decreasing range of the transmission power of the HS-SCCH in consideration of the change of the transmission power of the Downlink A-DPCH due to the change of the target value of the SIR of the Downlink A-DPCH. Therefore, it is made possible to optimize the transmission power of the HS-SCCH more suitably.

Moreover, the increase and decrease of the offset value are performed based on the information regarding the reception quality of the HS-SCCH, and the transmission power of the HS-SCCH is controlled as the value obtained by adding the offset value to the transmission power of the Downlink A-DPCH. Thus, the control of the transmission power of the DSCH is performed easily and efficiently. Then, when the Downlink A-DPCH target SIR is increased/decreased, an amount regarding the increase/decrease of this Downlink A-DPCH target SIR is subtracted from the offset value. Therefore, the amount of the increase/decrease of the transmission power of the Downlink A-DPCH, which is changed accompanied with this increase/decrease of the Downlink A-DPCH target SIR, can be subtracted from the variation of the offset in advance, and the radical variation in the transmission power of the HS-SCCH can be restricted.

### (Eighth embodiment)

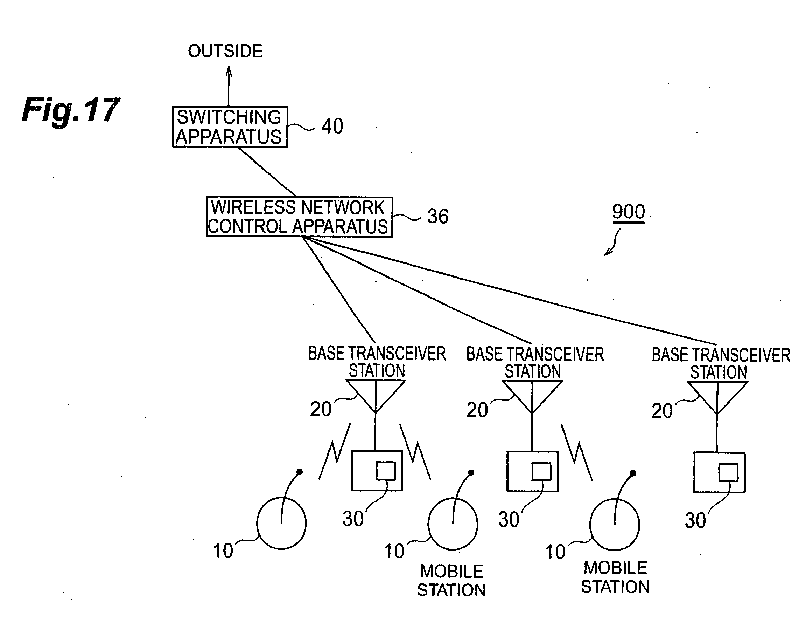

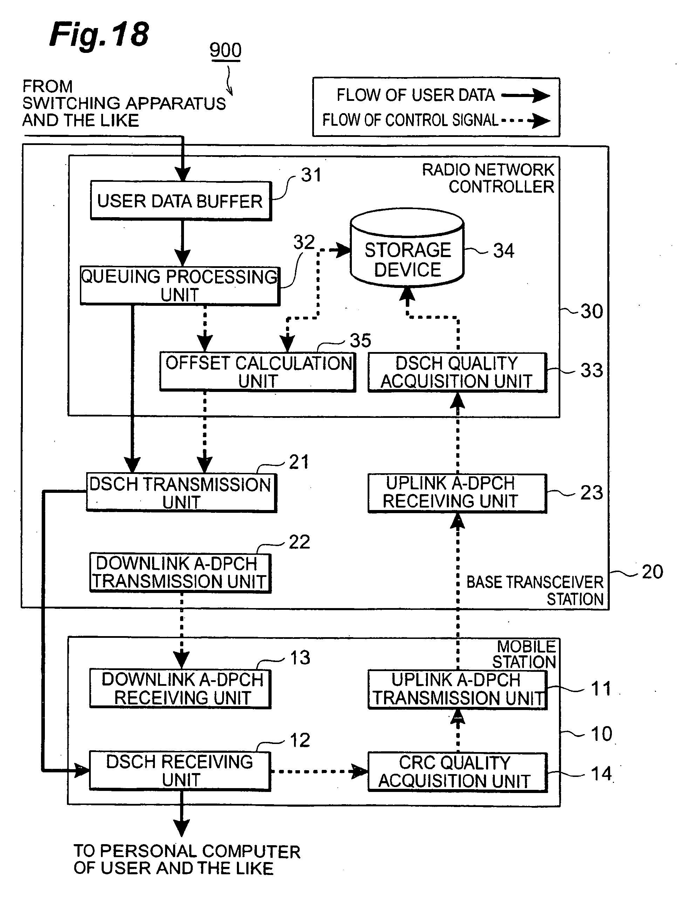

Next, the mobile packet communication system 900 according to an eighth embodiment of the present invention will be described with reference to Fig. 17 and Fig. 18. As shown in Fig. 17, the mobile packet communication system 900 is a system enabling a packet communication of a data signal to the mobile station. The mobile packet communication system 900 includes the plurality of mobile stations 10 carried and used by users and located in predetermined communication areas, the plurality of base transceiver stations 20 capable of directly performing wireless communications with these mobile stations 10, the radio network controllers 30 provided individually in the base transceiver stations 20 and controlling the packet communications between the base transceiver stations 20 and the mobile stations 10 generally and individually, the switching apparatus 40 functioning as a relay point with an outside network, and the wireless network control apparatus 36 relaying signals between the switching apparatus 40 and the plurality of base transceiver stations 20. The mobile packet communication system 900 is configured to enable mutual communications between the switching apparatus 40 and the mobile stations 10.

Fig. 18 is a conceptual view for explaining the functional configuration and operation of each of the base transceiver stations 20 of the mobile packet communication system 900 in the eighth embodiment. As shown in Fig. 18, a different point of the base transceiver station 20 of the mobile packet communication system 900 in this embodiment from the base transceiver station 20 of the mobile packet communication system 100 in the first embodiment is that the radio network controller 30 is provided in each of the base transceiver stations 20.

The configurations of the radio network controllers 30 and the mobile stations 10 in the mobile packet communication system 900 as described above are similar to those of the first embodiment. Moreover, configurations other than the radio network controllers 30 in the mobile stations 20 are similar to those of the first embodiment.

Then, according to the mobile packet communication system 900 as described above, the transmission power of the data signal (second signal) from the DSCH transmission unit 21 is controlled by a control flow similar to that of the first embodiment based on the transmission power of the control signal (first signal) of the Downlink A-DPCH and the reception quality of the DSCH in the mobile station 10, and an operation and an effect, which are similar to those of the first embodiment are exhibited. Furthermore, according to this embodiment, the mobile packet communication system 900 can execute and control a series of the processing from the acquisition of the reception quality of the DSCH to the determination of the transmission power and the instruction of the data transmission in the base transceiver station 20. Therefore, the control of the transmission power can be performed finely at a high speed.

### (Ninth embodiment)

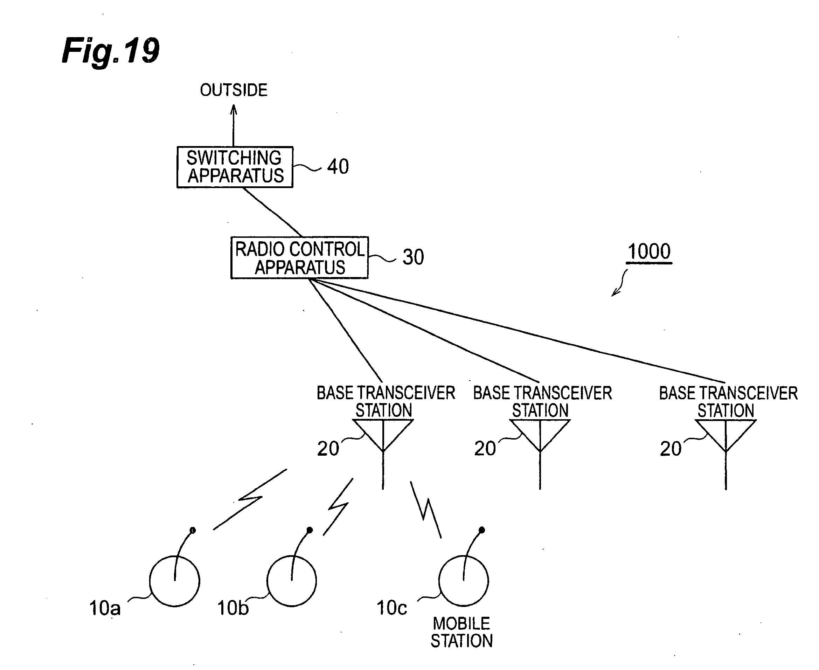

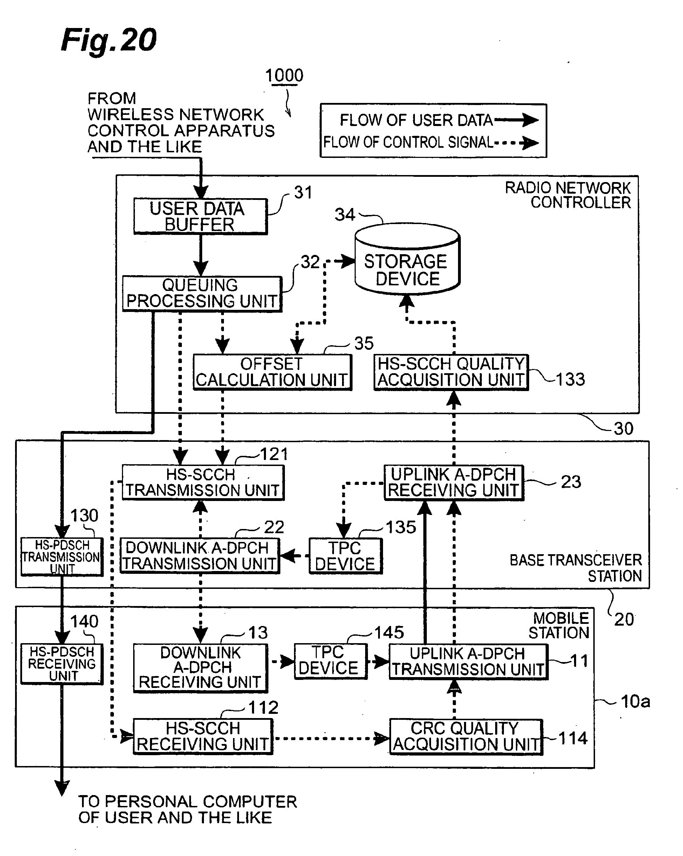

Next, the mobile packet communication system 1000 of a ninth embodiment of the present invention will be described with reference to Fig. 19 and Fig. 20. Fig. 19 is a schematic view showing an overall configuration example of the mobile packet communication system 1000 in this embodiment. The mobile packet communication system 1000 includes the mobile stations 10a to 10c carried and used by users and located in predetermined communication areas, the plurality of base transceiver stations 20 directly performing wireless communications with the plurality of mobile stations 10a to 10c, the radio network controller 30 controlling the packet communications between the base transceiver stations 20 and the mobile stations 10a to 10c generally and individually, and the switching apparatus 40 functioning as a relay point between radio network controller 30 and an outside signal network, all of which form staircases and are interconnected to enable mutual communications.

Fig. 20 is a conceptual view for explaining the functional configuration and operation of the mobile packet communication system 1000 in the ninth embodiment. A different point of the configuration of the base transceiver station 20 of the mobile packet communication system 1000 in this embodiment from the configuration of the base transceiver station 20 of the mobile packet communication system 500 in the fifth embodiment is a point that the radio network controller 30 is located outside the base transceiver stations 20. The radio network controller 30 is set capable of controlling the plurality of base transceiver stations 20. Specifically, the scheduling of the packet communications will be performed outside the base transceiver stations 20.

Moreover, the configurations of the radio network controllers 30 and the mobile stations 10a to 10c in the mobile packet communication system 1000 as described above are similar to those of the fifth embodiment. Moreover, the configuration of the base transceiver stations 20 is similar to that of the base transceiver stations 20 of the fifth embodiment except that the base transceiver stations 20 do not have the radio network controllers 30 therein but are connected to the radio network controller 30 located outside and make mutual communications therewith.

Then, according to the mobile packet communication system 1000 as described above, the transmission power of the HS-SCCH is controlled by a control flow similar to that of the fifth embodiment, and an operation and an effect, which are similar to those of the fifth embodiment, are exhibited.

Finally, a radio network control program and a computer-readable recording medium (hereinafter, simply referred to as a recording medium) having the radio network control program recorded therein according to the present embodiments of the present invention will be described. Here, the recording medium is one that allows a reading device provided in a hardware resource of a computer to cause a changing state of energy such as magnetism, light and electricity in accordance with description contents of a program, and is capable of transmitting the description contents of the program to the reading device in a signal format corresponding to the energy. As such a recoding medium, for example, a magnetic disk, an optical disk, a CD-ROM, a memory built in the computer and the like are applicable.

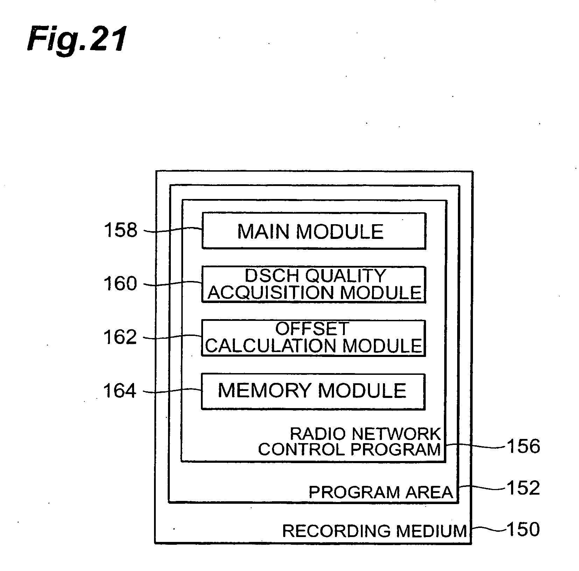

Fig. 21 is a constitutional view of a recording medium according to the present embodiments of the present invention. The recording medium 150 includes the program area 152 for recording the program. In this program area 152, the radio network control program 156 is recorded. The radio network control program 156 is a program allowing the computer to control the base transceiver stations 20, and is composed by including the main module 158 coordinating the processing, the DSCH quality acquisition module 160 acquiring the information regarding the quality of the DSCH, the offset calculation module 162 calculating the offset value of the transmission power of the DSCH, and the memory module 164 storing the offset value and the quality information of the DSCH. Here, the DSCH quality acquisition module 160 has a function similar to that of the DSCH quality acquisition unit 33, the offset calculation module 162 has a function similar to that of the offset calculation unit 35, and the memory module 164 has a function of allowing the storage device 34 to perform the storage. Specifically, the functions realized by operating the radio network control program 156 are similar to the functions of the radio network controller 30 of the first embodiment. Note that, in a similar way, radio network control programs realizing the functions of the radio network controllers 30 of the second to fourth and eighth embodiments and recording media having these radio network control programs recorded therein can be configured.

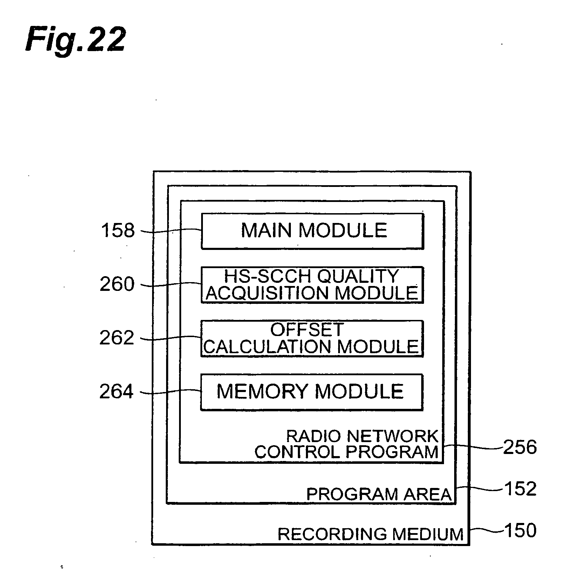

Fig. 22 is a constitutional view of another recording medium according to the present embodiments of the present invention. The radio network control program 256 is a program allowing the computer to control the base transceiver stations 20, and is composed by including the main module 158 coordinating the processing, the HS-SCCH quality acquisition module 260 acquiring the information regarding the quality of the HS-SCCH, the offset calculation module 262 calculating the offset value of the transmission power of the HS-SCCH, and the memory module 264 storing the offset value and the quality information of the HS-SCCH. Here, the HS-SCCH quality acquisition module 260 has a function similar to that of the HS-SCCH quality acquisition unit 133, the offset calculation module 262 has a function similar to that of the offset calculation unit 35, and the memory module 264 has a function of allowing the storage device 34 to perform the storage. Specifically, the functions realized by operating this radio network control program 256 are similar to the functions of the radio network controller 30 in the base transceiver station 20 of the fifth embodiment. Note that, in a similar way, radio network control programs realizing the functions of the radio network controllers 30 of the sixth, seventh and ninth embodiments and recording media having these radio network control programs recorded therein can be configured.

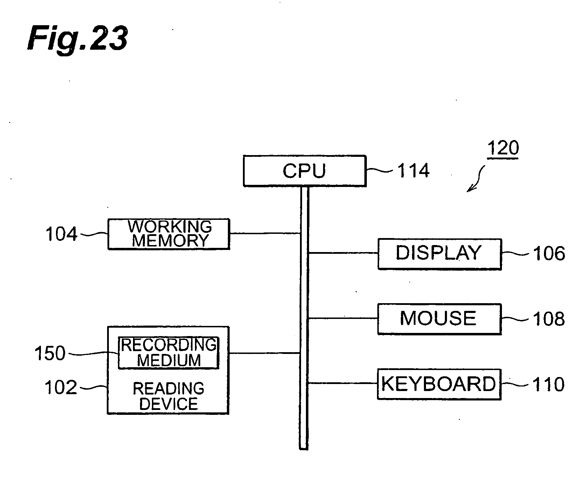

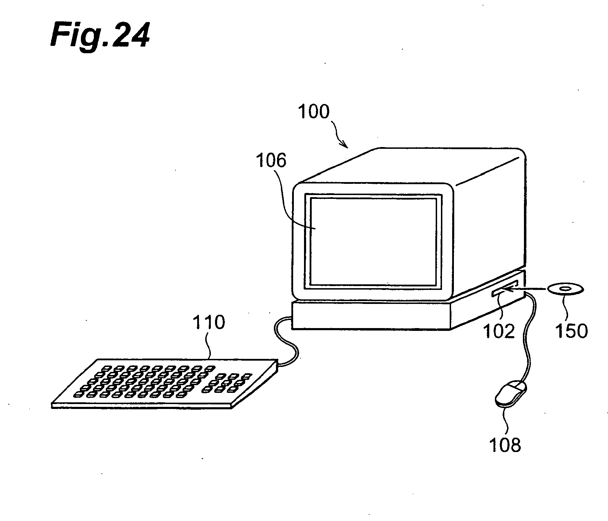

Fig. 23 is a constitutional view of a system of a computer (for example, a server system) for executing programs such as the radio network control programs 156 and the radio network control program 256, which are recorded in the recording medium 150, and Fig. 24 is a perspective view of a computer for executing the radio network control program 156 recorded in the recording medium 150. As shown in Fig. 23 and Fig. 24, the computer 120 includes the reading device 102, the working memory (RAM) 104 having an operating system (OS) resided therein, the display 106 as display means, the mouse 108 and the keyboard 110 as entry means, and the CPU 114 controlling the execution of the radio network control program 156 and the like. Here, when the recording medium 150 is inserted into the reading device 102, information recorded in the recording medium 150 is made accessible from the reading device 102, and the radio network control program 156 and the like recorded in the program area 152 of the recording medium 150 are made executable by the computer 120.

As the reading device 102, a flexible disk drive device, a CD-ROM drive device, a magnetic tape drive device or the like is used so as to correspond to the recording medium 150.

Note that the present invention is not limited to the above-described embodiments, and it is possible to adopt various modification modes. For example, in the first to fourth embodiments, the DSCH transmission unit 21 of the base transceiver station 20 controls the transmission power of the DSCH as one obtained by adding the predetermined offset value to the transmission power of the Downlink A-DPCH. However, the DSCH transmission unit 21 is not limited to this as long as the DSCH transmission unit 21 performs the control based on the transmission power of the Downlink A-DPCH. For example, no problem occurs even if the transmission power of the Downlink A-DPCH is multiplied by the predetermined offset value.

Furthermore, in the first to fourth embodiments, the radio network controller 30 is provided outside the base transceiver station 20; and however, not being limited to this, the power control function of the radio network controller 30 of each of the above-described embodiments may be provided in the base transceiver station 20.

Moreover, the fourth embodiment is one formed by adding the Downlink A-DPCH target SIR acquisition unit 38 and the like to the mobile packet communication system of the first embodiment; and however, no problem occurs even if the Downlink A-DPCH target SIR acquisition unit 38 and the like are added to the mobile packet communication system of each of the second and third embodiments.

Moreover, though the DSCH and the HS-SCCH are employed as the shared channels in the above-described embodiments, not being limited to this, a shared channel shared among the mobile stations by time division and controlled based on the transmission power of a dedicated channel such as the A-DPCH can be employed.

In addition, in the eighth embodiment, the radio network controller 30 of the first embodiment is provided in the base transceiver station 20; and however, not being limited to this, the radio network controller 30 of each of the second to fourth embodiments may be provided in the base transceiver station 20 for example.

Moreover, the ninth embodiment is configured such that the radio network controller 30 of the fifth embodiment is located outside the base transceiver stations 20; and however, not being limited to this, a configuration may be adopted, in which the radio network controller 30 of each of the sixth and seventh embodiments is located outside the base transceiver stations 20.

### Industrial Applicability

According to the radio network controller, the base transceiver station, the radio network control method, the mobile packet communication system, the mobile station, the radio network control program and the computer-readable recording medium in accordance with the present invention, the information regarding the reception quality of the shared channel in the mobile station is acquired, and the transmission power of the shared channel is further controlled based on the information regarding the reception quality of the shared channel in addition to the transmission power of the dedicated channel. Therefore, it is made possible to optimize this transmission power of the shared channel while restricting the deterioration of the reception quality. Thus, the interferences and the like given to the others can be decreased, and it is also made possible to increase a subscriber capacity.

## Claims

1. A radio network controller (30) for controlling a base transceiver station (20) which transmits a first signal to a plurality of mobile stations (10) by predetermined transmission power by use of dedicated channels to the respective mobile stations (10) and transmits a second signal to the plurality of mobile stations (10) by transmission power controlled based on the transmission power of the dedicated channel by use of a single shared channel among the plurality of mobile stations in a manner of not being overlapped in terms of time, the radio network controller (30) comprising:
controller side shared channel quality acquiring means (33) for acquiring information regarding reception quality of the shared channel in the mobile stations (10); and
shared channel transmission power controlling means (35) for further controlling the transmission power of the shared channel based on the acquired information regarding the reception quality of the shared channel;
wherein the shared channel transmission power controlling means (35) includes first offset value controlling means (35) for increasing an offset value of the transmission power of the shared channel when the reception quality of the shared channel does not satisfy a predetermined criterion or decreasing the offset value of the transmission power of the shared channel when the reception quality of the shared channel satisfies the criterion;
wherein the first offset value controlling means (35) does not perform increase and decrease of the transmission power of the shared channel based on the reception quality of the shared channel when the information regarding the reception quality of the shared channel was not able to be acquired.

2. The radio network controller (30) according to claim 1, further comprising storing means (34) for storing the information regarding the reception quality of the shared channel in association with the mobile stations (10), the information being acquired by the controller side shared channel quality acquiring means (33),
wherein the shared channel transmission power controlling means (35) controls the transmission power of the shared channel based on the information regarding the reception quality of the shared channel the information being stored in the storing means (34).

3. The radio network controller (30) according to any one of claims 1 and 2, wherein the controller side shared channel quality acquiring means (33) acquires information regarding a signal to interference ratio of the shared channel as the information regarding the reception quality of the shared channel in the mobile stations (10).

4. The radio network controller (30) according to any one of claims 1 and 2, wherein the controller side shared channel quality acquiring means (33) acquires information regarding a result of CRC determination on the second signal received through the shared channel as the information regarding the reception quality of the shared channel in the mobile stations (10).

5. The radio network controller (30) according to any one of claims 1 and 2, wherein the controller side shared channel quality acquiring means (33) acquires information regarding retransmission control of the second signal received through the shared channel as the information regarding the reception quality of the shared channel in the mobile stations (10).

6. The radio network controller (30) according to any one of claims 1 to 5, further comprising signal to interference ratio target value acquiring means (38) for acquiring information regarding a target value of a signal to interference ratio of the dedicated channel, the target value being set in each of the mobile stations (10),
wherein the shared channel transmission power controlling means (35) further controls the transmission power of the shared channel based on the information regarding the target value of the signal to interference ratio.

7. The radio network controller (30) according to claim 6, wherein the shared channel transmission power controlling means (35) includes second offset value controlling means (35) for increasing an offset value of the transmission power of the shared channel when the reception quality of the shared channel does not satisfy a predetermined criterion or decreasing the offset value of the transmission power of the shared channel when the reception quality of the shared channel satisfies the criterion, and further subtracting an amount regarding a change in the target value of the signal to interference ratio from the offset value of the transmission power of the shared channel.

8. The radio network controller (30) according to claim 7, wherein the second offset value controlling means (35) does not perform increase and decrease of the transmission power of the shared channel based on the reception quality of the shared channel when the information regarding the reception quality of the shared channel was not able to be acquired.

9. The radio network controller (30) according to any one of claims 1 to 8, wherein the first signal is a control signal, and the second signal is a data signal.

10. A base transceiver station (20), comprising:
dedicated channel transmitting means (22) for transmitting a first signal to a plurality of mobile stations (10) by predetermined transmission power by use of dedicated channels to the respective mobile stations (10);
shared channel transmitting means (21) for transmitting a second signal to the plurality of mobile stations (10) by transmission power controlled based on the transmission power of the dedicated channel by use of a single shared channel among the plurality of mobile stations (10) in a manner of not being overlapped in terms of time;
controller side shared channel quality acquiring means (23) for acquiring information regarding reception quality of the shared channel in the mobile stations; and
shared channel transmission power controlling means (35) for further controlling the transmission power of the shared channel based on the acquired information regarding the reception quality of the shared channel;
wherein the shared channel transmission power controlling means (35) includes first offset value controlling means (35) for increasing an offset value of the transmission power of the shared channel when the reception quality of the shared channel does not satisfy a predetermined criterion or decreasing the offset value of the transmission power of the shared channel when the reception quality of the shared channel satisfies the criterion;
wherein the first offset value controlling means (35) does not perform increase and decrease of the transmission power of the shared channel based on the reception quality of the shared channel when the information regarding the reception quality of the shared channel was not able to be acquired.

11. The base transceiver station (20) according to claim 10, further comprising storing means (34) for storing the information regarding the reception quality of the shared channel in association with the mobile stations (10), the information being acquired by the controller side shared channel quality acquiring means (133),
wherein the shared channel transmission power controlling means (35) controls the transmission power of the shared channel based on the information regarding the reception quality of the shared channel, the information being stored in the storing means (34).

12. The base transceiver station (20) according to any one of claims 10 and 11, wherein the controller side shared channel quality acquiring means (133) acquires information regarding a signal to interference ratio of the shared channel as the information regarding the reception quality of the shared channel in the mobile stations (10).

13. The base transceiver station (20) according to any one of claims 10 and 11, wherein the controller side shared channel quality acquiring means (133) acquires information regarding a result of CRC determination on the second signal received through the shared channel as the information regarding the reception quality of the shared channel in the mobile stations (10).

14. The base transceiver station (20) according to any one of claims 10 and 11, wherein the controller side shared channel quality acquiring means (133) acquires information regarding retransmission control of the second signal received through the shared channel as the information regarding the reception quality of the shared channel in the mobile stations (10) .

15. The base transceiver station (20) according to any one of claims 10 to 14, further comprising signal to interference ratio target value acquiring means (38) for acquiring information regarding a target value of a signal to interference ratio of the dedicated channel, the target value being set in each of the mobile stations (10),
wherein the shared channel transmission power controlling means (35) further controls the transmission power of the shared channel based on the information regarding the target value of the signal to interference ratio.

16. The base transceiver station (20) according to claim 15, wherein the shared channel transmission power controlling means (35) includes second offset value controlling means (35) for increasing an offset value of the transmission power of the shared channel when the reception quality of the shared channel does not satisfy a predetermined criterion, or decreasing the offset value of the transmission power of the shared channel when the reception quality of the shared channel satisfies the criterion, and further subtracting an amount regarding a change in the target value of the signal to interference ratio from the offset value of the transmission power of the shared channel.

17. The base transceiver station (20) according to claim 16, wherein the second offset value controlling means (35) does not perform increase and decrease of the transmission power of the shared channel based on the reception quality of the shared channel when the information regarding the reception quality of the shared channel was not able to be acquired.

18. A mobile packet communication system (100, 200, 300, 400, 500, 600, 800, 900, 1000) including a base transceiver station (20), and a radio network controller (30) for controlling the base transceiver station (20), the base transceiver station (20) including dedicated channel transmitting means (22) for transmitting a first signal to a plurality of mobile stations (10) by predetermined transmission power by use of dedicated channels to the respective mobile stations (10), and shared channel transmitting means (21) for transmitting a second signal to the plurality of mobile stations (10) by transmission power controlled based on the transmission power of the dedicated channel by use of a single shared channel among the plurality of mobile stations in a manner of not being overlapped in terms of time,
wherein the radio network controller (30) is the radio network controller (30) according to any one of claims 1 to 9.

19. A radio network control method for transmitting a first signal to a plurality of mobile stations (10) by predetermined transmission power by use of dedicated channels to the respective mobile stations (10) and for transmitting a second signal to the plurality of mobile stations (10) by transmission power controlled based on the transmission power of the dedicated channel by use of a single shared channel among the plurality of mobile stations (10) in a manner of not being overlapped in terms of time, the method comprising:
a controller side shared channel quality acquiring step (S102) of acquiring information regarding reception quality of the shared channel in the mobile stations (10); and
a shared channel transmission power controlling step (S104, S105, S120) of further controlling the transmission power of the shared channel based on the acquired information regarding the reception quality of the shared channel;
wherein the shared channel transmission power controlling step (S104, S105, S120) includes a first offset value controlling step (S104, S105, S120) of increasing an offset value of the transmission power of the shared channel when the reception quality of the shared channel does not satisfy a predetermined criterion or decreasing the offset value of the transmission power of the shared channel when the reception quality of the shared channel satisfies the criterion;
wherein the first offset value controlling step (S104, S105, S120) does not perform increase and decrease of the transmission power of the shared channel based on the reception quality of the shared channel when the information regarding the reception quality of the shared channel was not able to be acquired.

20. The radio network control method according to claim 19, further comprising a storing step (S106) of storing the information regarding the reception quality of the shared channel in storing means (34) in association with the mobile stations, the information being acquired by the controller side shared channel quality acquiring step (S102),
wherein the shared channel transmission power controlling step (S104, S105, S120) controls the transmission power of the shared channel based on the information regarding the reception quality of the shared channel, the information being stored in the storing means (34).

21. The radio network control method according to any one of claims 19 and 20, wherein the controller side shared channel quality acquiring step (S102) acquires information regarding a signal to interference ratio of the shared channel as the information regarding the reception quality of the shared channel in the mobile stations (10).

22. The radio network control method according to any one of claims 19 and 20, wherein the controller side shared channel quality acquiring step (S102) acquires information regarding a result of CRC determination on the second signal received through the shared channel as the information regarding the reception quality of the shared channel in the mobile stations (10).

23. The radio network control method according to any one of claims 19 and 20, wherein the controller side shared channel quality acquiring step (S102) acquires information regarding retransmission control of the second signal received through the shared channel as the information regarding the reception quality of the shared channel in the mobile stations (10).

24. The radio network control method according to any one of claims 19 to 23, further comprising a signal to interference ratio target value acquiring step of acquiring information regarding a target value of a signal to interference ratio of the dedicated channel, the target value being set in each of the mobile stations (10),
wherein the shared channel transmission power controlling step (S104, S105, S120) further controls the transmission power of the shared channel based on the received information regarding the target value of the signal to interference ratio.

25. The radio network control method according to claim 24, wherein the shared channel transmission power controlling step (S104, S105, S120) includes a second offset value controlling step (S104, S105, S120) of increasing an offset value of the transmission power of the shared channel when the reception quality of the shared channel does not satisfy a predetermined criterion, or decreasing the offset value of the transmission power of the shared channel when the reception quality of the shared channel satisfies the criterion, and further subtracting an amount regarding a change in the target value of the signal to interference ratio from the offset value of the shared channel.

26. The radio network control method according to claim 25, wherein the second offset value controlling step (S104, S105, S120) does not perform increase and decrease of the transmission power of the shared channel based on the reception quality of the shared channel when the information regarding the reception quality of the shared channel was not able to be acquired.

27. The radio network control method according to any one of claims 19 to 26, wherein the first signal is a control signal, and the second signal is a data signal.

28. A radio network control program (156, 256) for allowing a computer (100) to execute control for transmitting a first signal to a plurality of mobile stations (10) by predetermined transmission power by use of dedicated channels to the respective mobile stations (10), and control for transmitting a second signal to the plurality of mobile stations (10) by transmission power controlled based on the transmission power of the dedicated channel by use of a single shared channel among the plurality of mobile stations (10) in a manner of not being overlapped in terms of time, the radio network control program (156, 256) allowing the computer (100) to execute:
a controller side shared channel quality acquiring step (S102) of acquiring information regarding reception quality of the shared channel in the mobile stations; and
a shared channel transmission power controlling step (S104, S105, S120) of further controlling the transmission power of the shared channel based on the acquired information regarding the reception quality of the shared channel;
wherein the shared channel transmission power controlling step (S104, S105, S120) includes a first offset value controlling step (S104, S105, S120) of increasing an offset value of the transmission power of the shared channel when the reception quality of the shared channel does not satisfy a predetermined criterion or decreasing the offset value of the transmission power of the shared channel when the reception quality of the shared channel satisfies the criterion;
wherein the first offset value controlling step (S104, S105, S120) does not perform increase and decrease of the transmission power of the shared channel based on the reception quality of the shared channel when the information regarding the reception quality of the shared channel was not able to be acquired.

29. The radio network control program (156, 256) according to claim 28,
further allowing the computer (100) to execute a storing step (S106) of storing the information regarding the reception quality of the shared channel in storing means (34) in association with the mobile stations, the information being acquired by the controller side shared channel quality acquiring step (S102),
wherein the shared channel transmission power controlling step (S104, S105, S120) controls the transmission power of the shared channel based on the information regarding the reception quality of the shared channel, the information being stored in the storing means (34).

30. The radio network control program according to any one of claims 28 and 29, wherein the controller side shared channel quality acquiring step acquires information regarding a signal to interference ratio of the shared channel as the information regarding the reception quality of the shared channel in the mobile stations. -

31. The radio network control program according to any one of claims 28 and 29, wherein the controller side shared channel quality acquiring step S102) acquires information regarding a result of CRC determination on the second signal received through the shared channel as the information regarding the reception quality of the shared channel in the mobile stations (10).

32. The radio network control program according to any one of claims 28 and 29, wherein the controller side shared channel quality acquiring step (S102) acquires information regarding retransmission control of the second signal received through the shared channel as the information regarding the reception quality of the shared channel in the mobile stations (10).

33. The radio network control program according to any one of claims 28 to 32, further comprising a signal to interference ratio target value acquiring step of acquiring information regarding a target value of a signal to interference ratio of the dedicated channel, the target value being set in each of the mobile stations (10),
wherein the shared channel transmission power controlling step (S104, S105, S120) further controls the transmission power of the shared channel based on the received information regarding the target value of the signal to interference radio.

34. The radio network control program according to claim 33, wherein the shared channel transmission power controlling step (S104, S105, S120) includes a second offset value controlling step (S104, S105, S120) of increasing an offset value of the transmission power of the shared channel when the reception quality of the shared channel does not satisfy a predetermined criterion, or decreasing the offset value of the transmission power of the shared channel when the reception quality of the shared channel satisfies the criterion, and further subtracting an amount regarding a change in the target value of the signal to interference ratio from the offset value of the shared channel.

35. The radio network control program according to claim 34, wherein the second offset value controlling step (S104, S105, S120) does not perform increase and decrease of the transmission power of the shared channel based on the reception quality of the shared channel when the information regarding the reception quality of the shared channel was not able to be acquired.

36. The radio network control program according to any one of claims 28 to 35, wherein the first signal is a control signal, and the second signal is a data signal.

37. A computer-readable recording medium (150), wherein the radio network control program (156, 256) according to any one of claims 28 to 36 is recorded thereon.

## Patentansprüche

1. Funknetzwerksteuereinrichtung (30) zum Steuern einer Basis-Sende/Empfänger-Station (20), die ein erstes Signal an eine Mehrzahl von Mobilstationen (10) mittels vorbestimmter Sendeleistung unter Verwendung von dedizierten Kanälen zu den jeweiligen Mobilstationen (10) überträgt und ein zweites Signal an die Mehrzahl von Mobilstationen (10) mittels einer basierend auf der Sendeleistung des dedizierten Kanals gesteuerten Sendeleistung unter Verwendung eines einzigen geteilten Kanals unter der Mehrzahl von Mobilstationen auf eine hinsichtlich der Zeit nicht überlappenden Art überträgt, wobei die Funknetzwerksteuereinrichtung (30) aufweist:
Steuereinrichtungs-seitige Geteilter-Kanal-Qualitätsbeschaffungsmittel (33) zum Beschaffen von Information bezüglich der Empfangsqualität des geteilten Kanals der Mobilstationen (10); und
Geteilter-Kanal-Sendeleistungssteuermittel (35) zum weiteren Steuern der Sendeleistung des geteilten Kanals basierend auf der beschafften Information bezüglich der Empfangsqualität des geteilten Kanals;
wobei die Geteilter-Kanal-Sendeleistungssteuermittel (35) erste Offset-Wert-Steuermittel (35) aufweisen zum Erhöhen eines Offset-Werts der Sendeleistung des geteilten Kanals, wenn die Empfangsqualität des geteilten Kanals nicht ein vorbestimmtes Kriterium erfüllt oder Verringern des Offset-Werts der Sendeleistung des geteilten Kanals, wenn die Empfangsqualität des geteilten Kanals das Kriterium erfüllt;
wobei die erste Offset-Wert-Steuermittel (35) ein Erhöhen und Verringern der Sendeleistung des geteilten Kanals basierend auf der Empfangsqualität des geteilten Kanals nicht durchführen, wenn die Information bezüglich der Empfangsqualität des geteilten Kanals nicht beschafft werden konnte.

2. Funknetzwerksteuereinrichtung (30) gemäß Anspruch 1, ferner aufweisend Speichermittel (34) zum Speichern der Information bezüglich der Empfangsqualität des geteilten Kanals unter Zuordnung zu den Mobilstationen (10), wobei die Information von den Steuereinrichtungs-seitigen Geteilter-Kanal-Qualitätsbeschaffungsmitteln (33) beschafft wird,
wobei die Geteilter-Kanal-Sendeleistungssteuermittel (35) die Sendeleistung des geteilten Kanals basierend auf der Information bezüglich der Empfangsqualität des geteilten Kanals steuern, wobei die Information in den Speichermitteln (34) gespeichert ist.

3. Funknetzwerksteuereinrichtung (30) gemäß einem der Ansprüche 1 und 2, wobei die Steuereinrichtungs-seitigen Geteilter-Kanal-Qualitätsbeschaffungsmittel (33) Information bezüglich eines Signal-zu-InterferenzVerhältnisses des geteilten Kanals als die Information bezüglich der Empfangsqualität des geteilten Kanals in den Mobilstationen (10) beschaffen.

4. Funknetzwerksteuereinrichtung (30) gemäß einem der Ansprüche 1 und 2, wobei die Steuereinrichtungs-seitigen Geteilter-Kanal-Qualitätsbeschaffungsmittel (33) Information bezüglich eines Ergebnisses einer CRC-Bestimmung auf dem über den geteilten Kanal empfangenen zweiten Signal als die Information bezüglich der Empfangsqualität des geteilten Kanals in den Mobilstationen (10) beschaffen.

5. Funknetzwerksteuereinrichtung (30) gemäß einem der Ansprüche 1 und 2, wobei die Steuereinrichtungs-seitigen Geteilter-Kanal-Qualitätsbeschaffungsmittel (33) Information bezüglich Sendewiederholungssteuerung des durch den geteilten Kanal empfangenen zweiten Kanals als die Information bezüglich der Empfangsqualität des geteilten Kanals in den Mobilstationen (10) beschaffen.

6. Funknetzwerksteuereinrichtung (30) gemäß einem der Ansprüche 1 bis 5, ferner aufweisend Signal-zu-Interferenz-Verhältnis-Zielwertbeschaffungsmittel (38) zum Beschaffen von Information bezüglich eines Zielwerts eines Signal-zu-Interferenzverhältnisses des dedizierten Kanals, wobei der Zielwert in jeder der Mobilstationen (10) gesetzt wird,
wobei die Geteilter-Kanal-Sendeleistungssteuermittel (35) weiter die Sendeleistung des geteilten Kanals basierend auf der Information bezüglich des Zielwerts des Signal-zu-Interferenzverhältnisses steuern.

7. Funknetzwerksteuereinrichtung (30) gemäß Anspruch 6, wobei die Geteilter-Kanal-Sendeleistungssteuermittel (35) zweite Offsetwertsteuermittel (35) aufweisen zum Erhöhen eines Offsetwerts der Sendeleistung des geteilten Kanals, wenn die Empfangsqualität des geteilten Kanals ein vorbestimmtes Kriterium nicht erfüllt, oder Verringern des Offsetwerts der Sendeleistung des geteilten Kanals, wenn die Empfangsqualität des geteilten Kanals das Kriterium erfüllt, und weiter Subtrahieren eines Betrags bezüglich einer Änderung des Zielwerts des Signal-zu-Interferenzverhältnisses von dem Offsetwert der Sendeleistung des geteilten Kanals.

8. Funknetzwerksteuereinrichtung (30) gemäß Anspruch 7, wobei die zweiten Offsetwertsteuermittel (35) ein Erhöhen und Verringern der Sendeleistung des geteilten Kanals basierend auf der Empfangsqualität des geteilten Kanals nicht durchführen, wenn die Information bezüglich der Empfangsqualität nicht beschafft werden konnte.

9. Funknetzwerksteuereinrichtung (30) gemäß einem der Ansprüche 1 bis 8, wobei das erste Signal ein Steuersignal ist und das zweite Signal ein Datensignal ist.

10. Basis-Sende/Empfänger-Station (20), aufweisend:
Dedizierter-Kanal-Sendemittel (22) zum Senden eines ersten Signals an eine Mehrzahl von Mobilstationen (10) mittels vorbestimmter Sendeleistung unter Verwendung von dedizierten Kanälen zu den jeweiligen Mobilstationen (10);
Geteilter-Kanal-Sendemittel (21) zum Senden eines zweites Signals an die Mehrzahl von Mobilstationen (10) mittels einer basierend auf der Sendeleistung des dedizierten Kanals gesteuerten Sendeleistung unter Verwendung eines einzigen geteilten Kanals unter der Mehrzahl von Mobilstationen auf eine hinsichtlich der Zeit nicht überlappenden Art;
Steuereinrichtungs-seitige Geteilter-Kanal-Qualitätsbeschaffungsmittel (33) zum Beschaffen von Information bezüglich der Empfangsqualität des geteilten Kanals der Mobilstationen (10); und
Geteilter-Kanal-Sendeleistungssteuermittel (35) zum weiteren Steuern der Sendeleistung des geteilten Kanals basierend auf der beschafften Information bezüglich der Empfangsqualität des geteilten Kanals;
wobei die Geteilter-Kanal-Sendeleistungssteuermittel (35) erste Offset-Wert-Steuermittel (35) aufweisen zum Erhöhen eines Offset-Werts der Sendeleistung des geteilten Kanals, wenn die Empfangsqualität des geteilten Kanals nicht ein vorbestimmtes Kriterium erfüllt oder Verringern des Offset-Werts der Sendeleistung des geteilten Kanals, wenn die Empfangsqualität des geteilten Kanals das Kriterium erfüllt;
wobei die erste Offset-Wert-Steuermittel (35) ein Erhöhen und Verringern der Sendeleistung des geteilten Kanals basierend auf der Empfangsqualität des geteilten Kanals nicht durchführen, wenn die Information bezüglich der Empfangsqualität des geteilten Kanals nicht beschafft werden konnte.

11. Basis-Sende/Empfänger-Station (20) gemäß Anspruch 10, ferner aufweisend Speichermittel (34) zum Speichern der Information bezüglich der Empfangsqualität des geteilten Kanals unter Zuordnung zu den Mobilstationen (10), wobei die Information von den Steuereinrichtungs-seitigen Geteilter-Kanal-Qualitätsbeschaffungsmitteln (33) beschafft wird,
wobei die Geteilter-Kanal-Sendeleistungssteuermittel (35) die Sendeleistung des geteilten Kanals basierend auf der Information bezüglich der Empfangsqualität des geteilten Kanals steuern, wobei die Information in den Speichermitteln (34) gespeichert ist.

12. Basis-Sende/Empfänger-Station (20) gemäß einem der Ansprüche 10 und 11, wobei die Steuereinrichtungs-seitigen Geteilter-Kanal-Qualitätsbeschaffungsmittel (133) Information bezüglich eines Signal-zu-InterferenzVerhältnisses des geteilten Kanals als die Information bezüglich der Empfangsqualität des geteilten Kanals in den Mobilstationen (10) beschaffen.

13. Basis-Sende/Empfänger-Station (20) gemäß einem der Ansprüche 10 und 11, wobei die Steuereinrichtungs-seitigen Geteilter-Kanal-Qualitätsbeschaffungsmittel (133) Information bezüglich eines Ergebnisses einer CRC-Bestimmung auf dem über den geteilten Kanal empfangenen zweiten Signal als die Information bezüglich der Empfangsqualität des geteilten Kanals in den Mobilstationen (10) beschaffen.

14. Basis-Sende/Empfänger-Station (20) gemäß einem der Ansprüche 10 und 11, wobei die Steuereinrichtungs-seitigen Geteilter-Kanal-Qualitätsbeschaffungsmittel (133) Information bezüglich Sendewiederholungssteuerung des durch den geteilten Kanal empfangenen zweiten Kanals als die Information bezüglich der Empfangsqualität des geteilten Kanals in den Mobilstationen (10) beschaffen.

15. Basis-Sende/Empfänger-Station (20) gemäß einem der Ansprüche 10 bis 14, ferner aufweisend Signal-zu-Interferenz-Verhältnis-Zielwertbeschaffungsmittel (38) zum Beschaffen von Information bezüglich eines Zielwerts eines Signal-zu-Interferenzverhältnisses des dedizierten Kanals, wobei der Zielwert in jeder der Mobilstationen (10) gesetzt wird,
wobei die Geteilter-Kanal-Sendeleistungssteuermittel (35) weiter die Sendeleistung des geteilten Kanals basierend auf der Information bezüglich des Zielwerts des Signal-zu-Interferenzverhältnisses steuern.

16. Basis-Sende/Empfänger-Station (20) gemäß Anspruch 15, wobei die Geteilter-Kanal-Sendeleistungssteuermittel (35) zweite Offsetwertsteuermittel (35) aufweisen zum Erhöhen eines Offsetwerts der Sendeleistung des geteilten Kanals, wenn die Empfangsqualität des geteilten Kanals ein vorbestimmtes Kriterium nicht erfüllt, oder Verringern des Offsetwerts der Sendeleistung des geteilten Kanals, wenn die Empfangsqualität des geteilten Kanals das Kriterium erfüllt, und weiter Subtrahieren eines Betrags bezüglich einer Änderung des Zielwerts des Signal-zu-Interferenzverhältnisses von dem Offsetwert der Sendeleistung des geteilten Kanals.

17. Basis-Sende/Empfänger-Station (20) gemäß Anspruch 16, wobei die zweiten Offsetwertsteuermittel (35) ein Erhöhen und Verringern der Sendeleistung des geteilten Kanals basierend auf der Empfangsqualität des geteilten Kanals nicht durchführen, wenn die Information bezüglich der Empfangsqualität nicht beschafft werden konnte.

18. Mobil-Paket-Kommunikationssystem (100, 200, 300, 400, 500, 600, 700, 800, 900, 1000) aufweisend eine Basis-Sende/Empfänger-Station (20) und eine Funknetzwerksteuereinrichtung (30) zum Steuern des Basis-Sende/Empfänger-Station (20), wobei die Basis-Sende/Empfänger-Station (20) Dedizierter-Kanal-Sendemittel (22) zum Senden eines ersten Signals an eine Mehrzahl von Mobilstationen (10) mittels vorbestimmter Sendeleistung unter Verwendung von dedizierten Kanälen zu den jeweiligen Mobilstationen (10) und Geteilter-Kanal-Sendemittel (21) zum Senden eines zweites Signals an die Mehrzahl von Mobilstationen (10) mittels einer basierend auf der Sendeleistung des dedizierten Kanals gesteuerten Sendeleistung unter Verwendung eines einzigen geteilten Kanals unter der Mehrzahl von Mobilstationen auf eine hinsichtlich der Zeit nicht überlappenden Art aufweist, wobei die Funknetzwerksteuereinrichtung (30) die Funknetzwerksteuereinrichtung (30) gemäß einem der Ansprüche 1 bis 9 ist.

19. Funknetzwerksteuerverfahren zum Senden eines ersten Signals an eine Mehrzahl von Mobilstationen (10) mittels vorbestimmter Sendeleistung unter Verwendung von dedizierten Kanälen zu den jeweiligen Mobilstationen (10) und zum Senden eines zweiten Signals an die Mehrzahl von Mobilstationen (10) mittels einer basierend auf der Sendeleistung des dedizierten Kanals gesteuerten Sendeleistung unter Verwendung eines einzigen geteilten Kanals unter der Mehrzahl von Mobilstationen auf eine hinsichtlich der Zeit nicht überlappenden Art überträgt, wobei das Verfahren aufweist:
einen Steuereinrichtungs-seitige Geteilter-Kanal-Qualitätsbeschaffungsschritt (S102) zum Beschaffen von Information bezüglich der Empfangsqualität des geteilten Kanals der Mobilstationen (10); und
einen Geteilter-Kanal-Sendeleistungssteuerschritt (S104, S105, S120) zum weiteren Steuern der Sendeleistung des geteilten Kanals basierend auf der beschafften Information bezüglich der Empfangsqualität des geteilten Kanals;
wobei der Geteilter-Kanal-Sendeleistungssteuerschritt (S104, S105, S120) einen ersten Offset-Wert-Steuerschritt (S104, S105, S120) aufweist zum Erhöhen eines Offset-Werts der Sendeleistung des geteilten Kanals, wenn die Empfangsqualität des geteilten Kanals nicht ein vorbestimmtes Kriterium erfüllt oder Verringern des Offset-Werts der Sendeleistung des geteilten Kanals, wenn die Empfangsqualität des geteilten Kanals das Kriterium erfüllt;
wobei der erste Offset-Wert-Steuerschritt (S104, S105, S120) ein Erhöhen und Verringern der Sendeleistung des geteilten Kanals basierend auf der Empfangsqualität des geteilten Kanals nicht durchführt, wenn die Information bezüglich der Empfangsqualität des geteilten Kanals nicht beschafft werden konnte.

20. Funknetzwerksteuerverfahren gemäß Anspruch 19, ferner aufweisend einen Speicherschritt (S106) zum Speichern der Information bezüglich der Empfangsqualität des geteilten Kanals in Speichermitteln (34) unter Zuordnung zu den Mobilstationen, wobei die Information von dem Steuereinrichtungs-seitigen Geteilter-Kanal-Qualitätsbeschaffungsschritt (S102) beschafft wird,
wobei der Geteilter-Kanal-Sendeleistungssteuerschritt (S104, S105, S120) die Sendeleistung des geteilten Kanals basierend auf der Information bezüglich der Empfangsqualität des geteilten Kanals steuert, wobei die Information in den Speichermitteln (34) gespeichert ist.

21. Funknetzwerksteuerverfahren gemäß einem der Ansprüche 19 und 20, wobei der Steuereinrichtungs-seitige Geteilter-Kanal-Qualitätsbeschaffungsschritt (S102) Information bezüglich eines Signal-zu-InterferenzVerhältnisses des geteilten Kanals als die Information bezüglich der Empfangsqualität des geteilten Kanals in den Mobilstationen (10) beschafft.

22. Funknetzwerksteuerverfahren gemäß einem der Ansprüche 19 und 20, wobei der Steuereinrichtungs-seitige Geteilter-Kanal-Qualitätsbeschaffungsschritt (S102) Information bezüglich eines Ergebnisses einer CRC-Bestimmung auf dem über den geteilten Kanal empfangenen zweiten Signal als die Information bezüglich der Empfangsqualität des geteilten Kanals in den Mobilstationen (10) beschafft.

23. Funknetzwerksteuerverfahren gemäß einem der Ansprüche 19 und 20, wobei der Steuereinrichtungs-seitige Geteilter-Kanal-Qualitätsbeschaffungsschritt (S102) Information bezüglich Sendewiederholungssteuerung des durch den geteilten Kanal empfangenen zweiten Kanals als die Information bezüglich der Empfangsqualität des geteilten Kanals in den Mobilstationen (10) beschafft.

24. Funknetzwerksteuerverfahren gemäß einem der Ansprüche 19 bis 23, ferner aufweisend einen Signal-zu-Interferenz-Verhältnis-Zielwertbeschaffungsschritt zum Beschaffen von Information bezüglich eines Zielwerts eines Signal-zu-Interferenzverhältnisses des dedizierten Kanals, wobei der Zielwert in jeder der Mobilstationen (10) gesetzt wird,
wobei der Geteilter-Kanal-Sendeleistungssteuerschritt (S104, S105, S120) weiter die Sendeleistung des geteilten Kanals basierend auf der Information bezüglich des Zielwerts des Signal-zu-Interferenzverhältnisses steuert.

25. Funknetzwerksteuerverfahren gemäß Anspruch 24, wobei der Geteilter-Kanal-Sendeleistungssteuerschritt (S104, S105, S120) einen zweiten Offsetwertsteuerschritt (S104, S105, S120) aufweist zum Erhöhen eines Offsetwerts der Sendeleistung des geteilten Kanals, wenn die Empfangsqualität des geteilten Kanals ein vorbestimmtes Kriterium nicht erfüllt, oder Verringern des Offsetwerts der Sendeleistung des geteilten Kanals, wenn die Empfangsqualität des geteilten Kanals das Kriterium erfüllt, und weiter Subtrahieren eines Betrags bezüglich einer Änderung des Zielwerts des Signal-zu-Interferenzverhältnisses von dem Offsetwert der Sendeleistung des geteilten Kanals.

26. Funknetzwerksteuerverfahren gemäß Anspruch 25, wobei der zweite Offsetwertsteuerschritt (S104, S105, S120) ein Erhöhen und Verringern der Sendeleistung des geteilten Kanals basierend auf der Empfangsqualität des geteilten Kanals nicht durchführt, wenn die Information bezüglich der Empfangsqualität nicht beschafft werden konnte.

27. Funknetzwerksteuerverfahren gemäß einem der Ansprüche 19 bis 26, wobei das erste Signal ein Steuersignal ist und das zweite Signal ein Datensignal ist.

28. Funknetzwerksteuerprogramm (156, 256), um es einem Computer zu ermöglichen, ein Steuern zum Senden eines ersten Signals an eine Mehrzahl von Mobilstationen (10) mittels vorbestimmter Sendeleistung unter Verwendung von dedizierten Kanälen zu den jeweiligen Mobilstationen (10) und ein Steuern zum Senden eines zweiten Signals an die Mehrzahl von Mobilstationen (10) mittels einer basierend auf der Sendeleistung des dedizierten Kanals gesteuerten Sendeleistung unter Verwendung eines einzigen geteilten Kanals unter der Mehrzahl von Mobilstationen auf eine hinsichtlich der Zeit nicht überlappenden Art überträgt auszuführen, wobei das Funknetzwerksteuerprogramm (156, 256) es dem Computer ermöglicht, auszuführen:
einen Steuereinrichtungs-seitige Geteilter-Kanal-Qualitätsbeschaffungsschritt (S102) zum Beschaffen von Information bezüglich der Empfangsqualität des geteilten Kanals der Mobilstationen (10); und
einen Geteilter-Kanal-Sendeleistungssteuerschritt (S104, S105, S120) zum weiteren Steuern der Sendeleistung des geteilten Kanals basierend auf der beschafften Information bezüglich der Empfangsqualität des geteilten Kanals;
wobei der Geteilter-Kanal-Sendeleistungssteuerschritt (S104, S105, S120) einen ersten Offset-Wert-Steuerschritt (S104, S105, S120) aufweist zum Erhöhen eines Offset-Werts der Sendeleistung des geteilten Kanals, wenn die Empfangsqualität des geteilten Kanals nicht ein vorbestimmtes Kriterium erfüllt oder Verringern des Offset-Werts der Sendeleistung des geteilten Kanals, wenn die Empfangsqualität des geteilten Kanals das Kriterium erfüllt;
wobei der erste Offset-Wert-Steuerschritt (S104, S105, S120) ein Erhöhen und Verringern der Sendeleistung des geteilten Kanals basierend auf der Empfangsqualität des geteilten Kanals nicht durchführt, wenn die Information bezüglich der Empfangsqualität des geteilten Kanals nicht beschafft werden konnte.

29. Funknetzwerksteuerprogramm (156, 256) gemäß Anspruch 28,
ferner dem Computer (100) ermöglichend einen Speicherschritt (S106) zum Speichern der Information bezüglich der Empfangsqualität des geteilten Kanals in Speichermitteln (34) unter Zuordnung zu den Mobilstationen auszuführen, wobei die Information von dem Steuereinrichtungs-seitigen Geteilter-Kanal-Qualitätsbeschaffungsschritt (S102) beschafft wird,
wobei der Geteilter-Kanal-Sendeleistungssteuerschritt (S104, S105, S120) die Sendeleistung des geteilten Kanals basierend auf der Information bezüglich der Empfangsqualität des geteilten Kanals steuert, wobei die Information in den Speichermitteln (34) gespeichert ist.

30. Funknetzwerksteuerprogramm gemäß einem der Ansprüche 28 und 29, wobei der Steuereinrichtungs-seitige Geteilter-Kanal-Qualitätsbeschaffungsschritt (S102) Information bezüglich eines Signal-zu-InterferenzVerhältnisses des geteilten Kanals als die Information bezüglich der Empfangsqualität des geteilten Kanals in den Mobilstationen beschafft.

31. Funknetzwerksteuerprogramm gemäß einem der Ansprüche 28 und 29, wobei der Steuereinrichtungs-seitige Geteilter-Kanal-Qualitätsbeschaffungsschritt (S102) Information bezüglich eines Ergebnisses einer CRC-Bestimmung auf dem über den geteilten Kanal empfangenen zweiten Signal als die Information bezüglich der Empfangsqualität des geteilten Kanals in den Mobilstationen (10) beschafft.

32. Funknetzwerksteuerprogramm gemäß einem der Ansprüche 28 und 29, wobei der Steuereinrichtungs-seitige Geteilter-Kanal-Qualitätsbeschaffungsschritt (S102) Information bezüglich Sendewiederholungssteuerung des durch den geteilten Kanal empfangenen zweiten Kanals als die Information bezüglich der Empfangsqualität des geteilten Kanals in den Mobilstationen (10) beschafft.

33. Funknetzwerksteuerprogramm gemäß einem der Ansprüche 28 bis 32, ferner aufweisend einen Signal-zu-Interferenz-Verhältnis-Zielwertbeschaffungsschritt zum Beschaffen von Information bezüglich eines Zielwerts eines Signal-zu-Interferenzverhältnisses des dedizierten Kanals, wobei der Zielwert in jeder der Mobilstationen (10) gesetzt wird,
wobei der Geteilter-Kanal-Sendeleistungssteuerschritt (S104, S105, S120) weiter die Sendeleistung des geteilten Kanals basierend auf der Information bezüglich des Zielwerts des Signal-zu-Interferenzverhältnisses steuert.

34. Funknetzwerksteuerprogramm gemäß Anspruch 33, wobei der Geteilter-Kanal-Sendeleistungssteuerschritt (S104, S105, S120) einen zweiten Offsetwertsteuerschritt (S104, S105, S120) aufweist zum Erhöhen eines Offsetwerts der Sendeleistung des geteilten Kanals, wenn die Empfangsqualität des geteilten Kanals ein vorbestimmtes Kriterium nicht erfüllt, oder Verringern des Offsetwerts der Sendeleistung des geteilten Kanals, wenn die Empfangsqualität des geteilten Kanals das Kriterium erfüllt, und weiter Subtrahieren eines Betrags bezüglich einer Änderung des Zielwerts des Signal-zu-Interferenzverhältnisses von dem Offsetwert der Sendeleistung des geteilten Kanals.

35. Funknetzwerksteuerprogramm gemäß Anspruch 34, wobei der zweite Offsetwertsteuerschritt (S104, S105, S120) ein Erhöhen und Verringern der Sendeleistung des geteilten Kanals basierend auf der Empfangsqualität des geteilten Kanals nicht durchführt, wenn die Information bezüglich der Empfangsqualität nicht beschafft werden konnte.

36. Funknetzwerksteuerprogramm gemäß einem der Ansprüche 28 bis 35, wobei das erste Signal ein Steuersignal ist und das zweite Signal ein Datensignal ist.

37. Computer-lesbares Speichermedium (150), wobei das Funknetzwerksteuerprogramm (156, 256) gemäß irgendeinem der Ansprüche 28 bis 36 darauf gespeichert ist.

## Revendications

1. Contrôleur de réseau radio (30) destiné à commander une station émetteur récepteur de base (20) qui émet un premier signal vers une pluralité de stations mobiles (10) avec une puissance d'émission prédéterminée au moyen de canaux dédiés aux stations mobiles respectives (10) et qui émet un deuxième signal vers la pluralité de stations mobiles (10) avec une puissance d'émission commandée sur la base de la puissance d'émission du canal dédié au moyen d'un seul canal partagé parmi la pluralité de stations mobiles de manière à ce qu'il n'y ait aucun chevauchement en termes de temps, le contrôleur de réseau radio (30) comprenant :
des moyens d'acquisition de la qualité du canal partagé du côté du contrôleur (33) destinés à acquérir des informations qui se rapportent à la qualité de réception du canal partagé dans les stations mobiles (10) ; et
des moyens de commande de la puissance d'émission du canal partagé (35) destinés à commander en outre la puissance d'émission du canal partagé sur la base des informations acquises qui se rapportent à la qualité de réception du canal partagé ;
dans lequel les moyens de commande de la puissance d'émission du canal partagé (35) comprennent des premiers moyens de commande d'une valeur de décalage (35) destinés à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère ;
dans lequel les premiers moyens de commande d'une valeur de décalage (35) ne procèdent pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

2. Contrôleur de réseau radio (30) selon la revendication 1, comprenant en outre des moyens de stockage (34) destinés à stocker les informations qui se rapportent à la qualité de réception du canal partagé en association avec les stations mobiles (10), les informations étant acquises par les moyens d'acquisition de la qualité du canal partagé du côté du contrôleur (33) ;
dans lequel les moyens de commande de la puissance d'émission du canal partagé (35) commandent la puissance d'émission du canal partagé sur la base des informations qui se rapportent à la qualité de réception du canal partagé, les informations étant stockées dans les moyens de stockage (34).

3. Contrôleur de réseau radio (30) selon l'une quelconque des revendications 1 et 2, dans lequel les moyens d'acquisition de la qualité du canal partagé du côté du contrôleur (33) acquièrent des informations qui se rapportent à un rapport signal sur interférence du canal partagé en tant qu'informations qui se rapportent à la qualité de réception du canal partagé dans les stations mobiles (10).

4. Contrôleur de réseau radio (30) selon l'une quelconque des revendications 1 et 2, dans lequel les moyens d'acquisition de la qualité du canal partagé du côté du contrôleur (33) acquièrent des informations qui se rapportent à un résultat d'une détermination de CRC sur le deuxième signal reçu par l'intermédiaire du canal partagé en tant qu'informations qui se rapportent à la qualité de réception du canal partagé dans les stations mobiles (10).

5. Contrôleur de réseau radio (30) selon l'une quelconque des revendications 1 et 2, dans lequel les moyens d'acquisition de la qualité du canal partagé du côté du contrôleur (33) acquièrent des informations qui se rapportent à une commande de retransmission du deuxième signal reçu par l'intermédiaire du canal partagé en tant qu'informations qui se rapportent à la qualité de réception du canal partagé dans les stations mobiles (10).

6. Contrôleur de réseau radio (30) selon l'une quelconque des revendications 1 à 5, comprenant en outre des moyens d'acquisition d'une valeur cible du rapport signal sur interférence (38) destinés à acquérir des informations qui se rapportent à une valeur cible d'un rapport signal sur interférence du canal dédié, la valeur cible étant fixée dans chacune des stations mobiles (10) ;
dans lequel les moyens de commande de la puissance d'émission du canal partagé (35) commandent en outre la puissance d'émission du canal partagé sur la base des informations qui se rapportent à la valeur cible du rapport signal sur interférence.

7. Contrôleur de réseau radio (30) selon la revendication 6, dans lequel les moyens de commande de la puissance d'émission du canal partagé (35) comprennent des seconds moyens de commande d'une valeur de décalage (35) destinés à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère, et à soustraire en outre une quantité qui se rapporte à un changement de la valeur cible du rapport signal sur interférence, de la valeur de décalage de la puissance d'émission du canal partagé.

8. Contrôleur de réseau radio (30) selon la revendication 7, dans lequel les seconds moyens de commande d'une valeur de décalage (35) ne procèdent pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

9. Contrôleur de réseau radio (30) selon l'une quelconque des revendications 1 à 8, dans lequel le premier signal est un signal de commande, et le deuxième signal est un signal de données.

10. Station émetteur récepteur de base (20), comprenant :
des moyens d'émission de canal dédié (22) destinés à émettre un premier signal vers une pluralité de stations mobiles (10) avec une puissance d'émission prédéterminée au moyen de canaux dédiés aux stations mobiles respectives (10) ;
des moyens d'émission de canal partagé (21) destinés à émettre un deuxième signal vers la pluralité de stations mobiles (10) avec une puissance d'émission commandée sur la base de la puissance d'émission du canal dédié au moyen d'un seul canal partagé parmi la pluralité de stations mobiles (10) de manière à ce qu'il n'y aucun chevauchement en termes de temps ;
des moyens d'acquisition de la qualité du canal partagé du côté du contrôleur (23) destinés à acquérir des informations qui se rapportent à la qualité de réception du canal partagé dans les stations mobiles ; et
des moyens de commande de la puissance d'émission du canal partagé (35) destinés à commander en outre la puissance d'émission du canal partagé sur la base des informations acquises qui se rapportent à la qualité de réception du canal partagé ;
dans lequel les moyens de commande de la puissance d'émission du canal partagé (35) comprennent des premiers moyens de commande d'une valeur de décalage (35) destinés à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère ;
dans lequel les premiers moyens de commande d'une valeur de décalage (35) ne procèdent pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

11. Station émetteur récepteur de base (20) selon la revendication 10, comprenant en outre des moyens de stockage (14) destinés à stocker les informations qui se rapportent à la qualité de réception du canal partagé en association avec les stations mobiles (10), les informations étant acquises par les moyens d'acquisition de la qualité du canal partagé du côté du contrôleur (133) ;
dans lequel les moyens de commande de la puissance d'émission du canal partagé (35) commandent la puissance d'émission du canal partagé sur la base des informations qui se rapportent à la qualité de réception du canal partagé, les informations étant stockées dans les moyens de stockage (34).

12. Station émetteur récepteur de base (20) selon l'une quelconque des revendications 10 et 11, dans lequel les moyens d'acquisition de la qualité du canal partagé du côté du contrôleur (133) acquièrent des informations qui se rapportent à un rapport signal sur interférence du canal partagé en tant qu'informations qui se rapportent à la qualité de réception du canal partagé dans les stations mobiles (10).

13. Station émetteur récepteur de base (20) selon l'une quelconque des revendications 10 et 11, dans lequel les moyens d'acquisition de la qualité du canal partagé du côté du contrôleur (133) acquièrent des informations qui se rapportent à un résultat d'une détermination de CRC sur le deuxième signal reçu par l'intermédiaire du canal partagé en tant qu'informations qui se rapportent à la qualité de réception du canal partagé dans les stations mobiles (10).

14. Station émetteur récepteur de base (20) selon l'une quelconque des revendications 10 et 11, dans lequel les moyens d'acquisition de la qualité du canal partagé du côté du contrôleur (133) acquièrent des informations qui se rapportent à une commande de retransmission du deuxième signal reçu par l'intermédiaire du canal partagé en tant qu'informations qui se rapportent à la qualité de réception du canal partagé dans les stations mobiles (10).

15. Station émetteur récepteur de base (20) selon l'une quelconque des revendications 10 à 14, comprenant en outre des moyens d'acquisition d'une valeur cible du rapport signal sur interférence (38) destinés à acquérir des informations qui se rapportent à une valeur cible d'un rapport signal sur interférence du canal dédié, la valeur cible étant fixée dans chacune des stations mobiles (10) ;
dans lequel les moyens de commande de la puissance d'émission du canal partagé (35) commandent en outre la puissance d'émission du canal partagé sur la base des informations qui se rapportent à la valeur cible du rapport signal sur interférence.

16. Station émetteur récepteur de base (20) selon la revendication 15, dans lequel les moyens de commande de la puissance d'émission du canal partagé (35) comprennent des seconds moyens de commande d'une valeur de décalage (35) destinés à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère, et à soustraire en outre une quantité qui se rapporte à un changement de la valeur cible du rapport signal sur interférence, de la valeur de décalage de la puissance d'émission du canal partagé.

17. Station émetteur récepteur de base (20) selon la revendication 16, dans lequel les seconds moyens de commande d'une valeur de décalage (35) ne procèdent pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

18. Système de communication de paquet mobile (100, 200, 300, 400, 500, 600, 800, 900, 1000) comprenant une station émetteur récepteur de base (20), et un contrôleur de réseau radio (30) destiné à commander la station émetteur récepteur de base (20), la station émetteur récepteur de base (20) comprenant des moyens d'émission de canal dédié (22) destinés à émettre un premier signal vers une pluralité de stations mobiles (10) avec une puissance d'émission prédéterminée au moyen de canaux dédiés aux stations mobiles respectives (10), et des moyens d'émission de canal partagé (21) destinés à émettre un deuxième signal vers la pluralité de stations mobiles (10) avec une puissance d'émission commandée sur la base de la puissance d'émission du canal dédié au moyen d'un seul canal partagé parmi la pluralité de stations mobiles de manière à ce qu'il y ait aucun chevauchement en termes de temps ;
dans lequel le contrôleur de réseau radio (30) est le contrôleur de réseau radio (30) selon l'une quelconque des revendications 1 à 9.

19. Procédé de commande d'un réseau radio destiné à émettre un premier signal vers une pluralité de stations mobiles (10) avec une puissance d'émission prédéterminée au moyen de canaux dédiés aux stations mobiles respectives (10) et à émettre un deuxième signal vers la pluralité de stations mobiles (10) avec une puissance d'émission commandée sur la base de la puissance d'émission du canal dédié au moyen d'un seul canal partagé parmi la pluralité de stations mobiles de manière à ce qu'il n'y ait aucun chevauchement en termes de temps, le procédé comprenant :
une étape d'acquisition de la qualité du canal partagé du côté du contrôleur (S 102) consistant à acquérir des informations qui se rapportent à la qualité de réception du canal partagé dans les stations mobiles (10) ; et
une étape de commande de la puissance d'émission du canal partagé (S 104, S105, S 120) consistant à commander en outre la puissance d'émission du canal partagé sur la base des informations acquises qui se rapportent à la qualité de réception du canal partagé ;
dans lequel l'étape de commande de la puissance d'émission du canal partagé (S104, S105, S120) comprend une première étape de commande d'une valeur de décalage (S104, S105, S120) consistant à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère ;
dans lequel la première étape de commande d'une valeur de décalage (S104, S105, S120) ne procède pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

20. Procédé de commande d'un réseau radio selon la revendication 19, comprenant en outre une étape de stockage (S 106) consistant à stocker les informations qui se rapportent à la qualité de réception du canal partagé dans les moyens de stockage (34) en association avec les stations mobiles, les informations étant acquises dans l'étape d'acquisition de la qualité du canal partagé du côté du contrôleur (S 102) ;
dans lequel l'étape de commande de la puissance d'émission du canal partagé (S104, S105, S120) commande la puissance d'émission du canal partagé sur la base des informations qui se rapportent à la qualité de réception du canal partagé, les informations étant stockées dans les moyens de stockage (34).

21. Procédé de commande d'un réseau radio selon l'une quelconque des revendications 19 et 20, dans lequel l'étape d'acquisition de la qualité du canal partagé du côté du contrôleur (S 102) acquiert des informations qui se rapportent à un rapport signal sur interférence du canal partagé en tant qu'informations qui se rapportent à la qualité de réception du canal partagé dans les stations mobiles (10).

22. Procédé de commande d'un réseau radio selon l'une quelconque des revendications 19 et 20, dans lequel l'étape d'acquisition de la qualité du canal partagé du côté du contrôleur (S102) acquiert des informations qui se rapportent à un résultat d'une détermination de CRC sur le deuxième signal reçu par l'intermédiaire du canal partagé en tant qu'informations qui se rapportent à la qualité de réception du canal partagé dans les stations mobiles (10).

23. Procédé de commande d'un réseau radio selon l'une quelconque des revendications 19 et 20, dans lequel l'étape d'acquisition de la qualité du canal partagé du côté du contrôleur (S 102) acquiert des informations qui se rapportent à une commande de retransmission du deuxième signal reçu par l'intermédiaire du canal partagé en tant qu'informations qui se rapportent à la qualité de réception du canal partagé dans les stations mobiles (10).

24. Procédé de commande d'un réseau radio selon l'une quelconque des revendications 19 à 23, comprenant en outre une étape d'acquisition d'une valeur cible du rapport signal sur interférence consistant à acquérir des informations qui se rapportent à une valeur cible d'un rapport signal sur interférence du canal dédié, la valeur cible étant fixée dans chacune des stations mobiles (10) ;
dans lequel l'étape de commande de la puissance d'émission du canal partagé (S 104, S 105, S 120) commande en outre la puissance d'émission du canal partagé sur la base des informations reçues qui se rapportent à la valeur cible du rapport signal sur interférence.

25. Procédé de commande d'un réseau radio selon la revendication 24, dans lequel l'étape de commande de la puissance d'émission du canal partagé (S104, S105, S 120) comprend une seconde étape de commande d'une valeur de décalage (S 104, S 105, S 120) consistant à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère, et à soustraire en outre une quantité qui se rapporte à un changement de la valeur cible du rapport signal sur interférence, de la valeur de décalage du canal partagé.

26. Procédé de commande d'un réseau radio selon la revendication 25, dans lequel la seconde étape de commande d'une valeur de décalage (S 104, S 105, S 120) ne procède pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

27. Procédé de commande d'un réseau radio selon l'une quelconque des revendications 19 à 26, dans lequel le premier signal est un signal de commande, et le deuxième signal est un signal de données.

28. Programme de commande d'un réseau radio (156, 256) destiné à permettre à un ordinateur (100) d'exécuter une commande destinée à émettre un premier signal vers une pluralité de stations mobiles (10) avec une puissance d'émission prédéterminée au moyen de canaux dédiés aux stations mobiles respectives (10), et une commande destinée à émettre un deuxième signal vers la pluralité de stations mobiles (10) avec une puissance d'émission commandée sur la base de la puissance d'émission du canal dédié au moyen d'un seul canal partagé parmi la pluralité de stations mobiles (10) de manière à ce qu'il n'y ait aucun chevauchement en termes de temps, le programme de commande d'un réseau radio (156, 256) permettant à l'ordinateur (100) d'exécuter :
une étape d'acquisition de la qualité du canal partagé du côté du contrôleur (S102) destinée à acquérir des informations qui se rapportent à la qualité de réception du canal partagé dans les stations mobiles ; et
une étape de commande de la puissance d'émission du canal partagé (S 104, S105, S 120) destinée à commander en outre la puissance d'émission du canal partagé sur la base des informations acquises qui se rapportent à la qualité de réception du canal partagé ;
dans lequel l'étape de commande de la puissance d'émission du canal partagé (S 104, S105, S 120) comprend une première étape de commande d'une valeur de décalage (S104, S105, S120) consistant à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère ;
dans lequel la première étape de commande d'une valeur de décalage (S 104, S105, S 120) ne procède pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

29. Programme de commande d'un réseau radio (156, 256) selon la revendication 28,
permettant en outre à l'ordinateur (100) d'exécuter une étape de stockage (S 106) consistant à stocker les informations qui se rapportent à la qualité de réception du canal partagé dans les moyens de stockage (34) en association avec les stations mobiles, les informations étant acquises dans l'étape d'acquisition de la qualité du canal partagé du côté du contrôleur (S 102) ;
dans lequel l'étape de commande de la puissance d'émission du canal partagé (S104, S105, S120) commande la puissance d'émission du canal partagé sur la base des informations qui se rapportent à la qualité de réception du canal partagé, les informations étant stockées dans les moyens de stockage (34).

30. Programme de commande d'un réseau radio selon l'une quelconque des revendications 28 et 29, dans lequel l'étape d'acquisition de la qualité du canal partagé du côté du contrôleur acquiert des informations qui se rapportent à un rapport signal sur interférence du canal partagé en tant qu'informations qui se rapportent à la qualité de réception du canal partagé dans les stations mobiles.

31. Programme de commande d'un réseau radio selon l'une quelconque des revendications 28 et 29, dans lequel l'étape d'acquisition de la qualité du canal partagé du côté du contrôleur (S 102) acquiert des informations qui se rapportent à un résultat d'une détermination de CRC sur le deuxième signal reçu par l'intermédiaire du canal partagé en tant qu'informations qui se rapportent à la qualité de réception du canal partagé dans les stations mobiles (10).

32. Programme de commande d'un réseau radio selon l'une quelconque des revendications 28 et 29, dans lequel l'étape d'acquisition de la qualité du canal partagé du côté du contrôleur (S102) acquiert des informations qui se rapportent à une commande de retransmission du deuxième signal reçu par l'intermédiaire du canal partagé en tant qu'informations qui se rapportent à la qualité de réception du canal partagé dans les stations mobiles (10).

33. Programme de commande d'un réseau radio selon l'une quelconque des revendications 28 à 32, comprenant en outre une étape d'acquisition d'une valeur cible du rapport signal sur interférence consistant à acquérir des informations qui se rapportent à une valeur cible d'un rapport signal sur interférence du canal dédié, la valeur cible étant fixée dans chacune des stations mobiles (10) ;
dans lequel l'étape de commande de la puissance d'émission du canal partagé (S104, S105, S120) commande en outre la puissance d'émission du canal partagé sur la base des informations reçues qui se rapportent à la valeur cible du rapport signal sur interférence.

34. Programme de commande d'un réseau radio selon la revendication 33, dans lequel l'étape de commande de la puissance d'émission du canal partagé (S104, S105, S120) comprend une seconde étape de commande d'une valeur de décalage (S104, S105, S120) consistant à augmenter une valeur de décalage de la puissance d'émission du canal partagé lorsque la qualité de réception du canal partagé ne satisfait pas à un critère prédéterminé, ou à diminuer la valeur de décalage de la puissance d'émission du canal partagé lorsque la qualité de réception du canal partagé satisfait au critère, et à soustraire en outre une quantité qui se rapporte à un changement de la valeur cible du rapport signal sur interférence, de la valeur de décalage du canal partagé.

35. Programme de commande d'un réseau radio selon la revendication 34, dans lequel la seconde étape de commande d'une valeur de décalage (S 104, S105, S 120) ne procède pas à une augmentation ni à une diminution de la puissance d'émission du canal partagé sur la base de la qualité de réception du canal partagé lorsque les informations qui se rapportent à la qualité de réception du canal partagé n'ont pas pu être acquises.

36. Programme de commande d'un réseau radio selon l'une quelconque des revendications 28 à 35, dans lequel le premier signal est un signal de commande, et le deuxième signal est un signal de données.

37. Support d'enregistrement pouvant être lu par un ordinateur (150), dans lequel est enregistré le programme de commande d'un réseau radio (156, 256) selon l'une quelconque des revendications 28 à 36.
